# EUROPEAN PATENT SPECIFICATION

(11) **EP 4 565 454 B1**
(45) Date of publication and mention of the grant of the patent: **31.12.2025**
(21) Application number: 23798548.6
(22) Date of filing: 29.09.2023
(51) Int. Cl.: B60N 2/07, B60N 2/08, B60N 2/02

(54) **LOOP LATCH MECHANISM FOR POWER LONG RAIL ASSEMBLY**
SCHLEIFENVERRIEGELUNGSMECHANISMUS FÜR LANGE STROMSCHIENENANORDNUNG
MÉCANISME DE VERROU À BOUCLE POUR ENSEMBLE RAIL LONG MOTORISÉ

(30) Priority: 30.09.2022 US 202263412047 P
(43) Date of publication of application: 11.06.2025
(73) Proprietor: Magna Seating Inc., Aurora, Ontario L4G 7K1 (CA)
(72) Inventor: JONASCU, Katarina, Howell, MI 48843 (US); ZHAO, Kai, Novi, MI 78374 (US); RUNDE, David, M., Ortonville, MI 48462 (US)
(74) Representative: Witte, Weller & Partner Patentanwälte mbB
(86) International application number: PCT/US2023/034087
(87) International publication number: WO 2024/073030

(56) References cited:
- WO-A2-2020/131777

## Description

### FIELD AND BACKGROUND OF THE INVENTION

The present invention relates to a seat assembly for use in an automotive vehicle. More particularly, the invention relates to a loop latch mechanism for use in an automotive seat assembly.

### DESCRIPTION OF RELATED ART

Automotive vehicles typically include one or more seat assemblies having a seat cushion and a seat back for supporting a passenger above a vehicle floor. It is commonly known for certain automotive vehicles to include a long rail System configured to provide fore-aft adjustability of the seat assembly along laterally spaced apart long rails. It is also commonly known for the seat assemblies to include opposing loop latch mechanisms configured to lock the seat assembly to the long rails.

Typically, the seat assembly includes a loop latch release configured to selectively unlock the loop latch mechanism(s) to allow fore-aft adjustment of the seat assembly. In addition, the loop latch release typically allows the loop latch mechanism(s) to relock after the seat assembly is repositioned.

One exemplary loop latch release includes a cross rod operatively connected between the loop latch mechanisms and a motor operatively connected to the cross rod. To unlock the loop latch mechanisms, the motor rotates the cross rod which in turn unlocks the loop latch mechanisms. The motor rotates the cross rod a second time to allow the loop latch mechanisms to relock.

However, the motor and the cross rod might cause foot room and packaging issues when included in certain seat assemblies.

It is desirable for the seat assembly to include a loop latch release which lacks a cross rod operatively coupled between the opposing loop latch mechanisms.

WO 2020/131777 A2 discloses a power long rail assembly attached to a vehicle floor for repositioning vehicle seats in the vehicle between a plurality of seating positions. The power long rail assembly includes a fixed long rail and a power rail drive assembly configured to travel along the fixed long rail. The power rail drive assembly has an upper channel having a driving wheel configured to frictionally and/or meshingly engage with the fixed rail, a fore/aft motor operatively coupled to the driving wheel, a latch assembly for locking the upper channel to the fixed long rail, and a latch release mechanism having a latch motor operatively coupled to a release plunger for automatically unlocking the latch assembly from the fixed long rail, and a fore/aft button operatively coupled to the fore/aft motor and to the latch motor to selectively activate the fore/aft motor and the latch motor.

### SUMMARY OF THE INVENTION

According to the invention there is provided a loop latch release for an automotive seat assembly with the features of claim 1 and a long rail assembly with the features of claim 13.

### BRIEF DESCRIPTION OF THE DRAWINGS

Advantages of the present invention will be readily appreciated as the same becomes better understood by reference to the following detailed description when considered in connection with the accompanying drawings wherein:
Figure 1 is a perspective view of a power long rail assembly including a seat base, opposing upper channels, long rails, loop latches, and loop latch releases, according to one embodiment of the present invention;
Figure 2 is an enlarged view of portion 2 of the seat base of Figure 1;
Figure 3 is a rear left perspective view of portion 2 of Figure 2;
Figure 4 is a front right cutaway perspective view of portion 2 of Figure 3;
Figure 5 is a partially transparent cross-sectional view of Figure 4 taken along line 5-5 with the loop latch release in an unactuated condition and the loop latch in a locked condition;
Figure 6 is a cross-sectional view of Figure 3 taken along line 6-6;
Figure 7 is a top view of Figure 3;
Figure 8 is exploded view of the loop latch release of Figure 5 including a mounting bracket, a lever arm, a plunger, an arm pawl, a bracket pawl, pawl springs, and a rotating cam, according to one embodiment of the present invention;
Figure 9 is a left side view of the mounting bracket of Figure 8;
Figure 10 is a right side view of the mounting bracket of Figure 9;
Figure 11 is a perspective view of one of the pawls of Figure 8;
Figure 12 is partially transparent side view of the pawl of Figure 11 assembled with the pawl spring of Figure 8;
Figure 13 is a partially transparent fragmentary side view of the loop latch release of Figure 5, showing the arm pawl assembled with the lever arm and the bracket pawl assembled with the mounting bracket;
Figure 14 is a top view of the rotating cam of Figure 8;
Figure 15 is a left side view of the rotating cam of Figure 14:
Figure 16 is a partially transparent cross-sectional view of Figure 4 taken along line 5-5 with the loop latch release in the unactuated condition, the plunger in a raised position, and the loop latch in the locked condition;
Figure 17 is an enlarged view of portion 17 of Figure 16;
Figure 18 is a cross-sectional view of Figure 16, showing the loop latch release partially actuated with the lever arm rotated partially forward and the loop latch in the locked condition;
Figure 19 is a cross-sectional view of Figure 18, showing the loop latch release in an actuated condition with the lever arm engaged with a forward stop on the mounting bracket, the plunger in a lowered position, and the loop latch in an unlocked condition;
Figure 20 is a cross-sectional view of Figure 19, showing the loop latch release in the actuated condition with the lever arm rotated partially rearward, the plunger in the lowered position, and the loop latch in the unlocked condition;
Figure 21 is a cross-sectional view of Figure 20, showing the loop latch release in the actuated condition with the lever arm engaged with a rearward stop on the mounting bracket, the plunger in the lowered position, and the loop latch in the unlocked condition;
Figure 22 is a cross-sectional view of Figure 21, showing the loop latch release in the actuated condition with the lever arm rotated partially forward, the plunger in the lowered position, and the loop latch in the unlocked condition;
Figure 23 is a cross-sectional view of Figure 22, showing the loop latch release in the unactuated condition with the lever arm engaged with the forward stop on the mounting bracket, the plunger in the raised position, and the loop latch in the locked condition;
Figure 24 is a cross-sectional view of Figure 23, showing the loop latch release in the unactuated condition with the lever arm rotated partially rearward, the plunger in the raised position, and the loop latch in the locked condition; and
Figure 25 is a cross-sectional view of Figure 24, showing the loop latch release in the unactuated condition with the lever arm engaged with the rearward stop on the mounting bracket, the plunger in the raised position, and the loop latch in the locked condition.

### DETAILED DESCRIPTION OF THE INVENTION

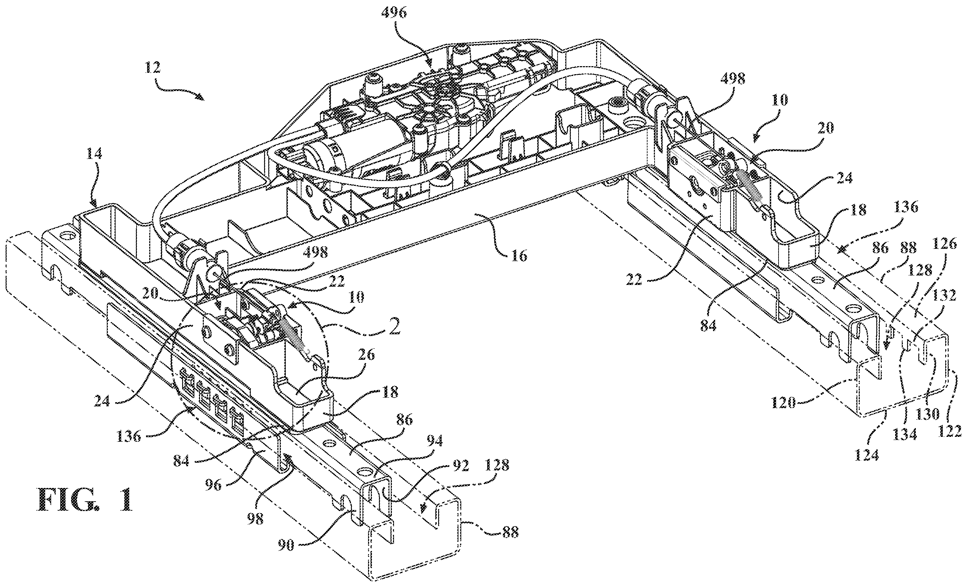

Figures 1-25 illustrate components of a loop latch release 10 for use in a power long rail assembly 12 configured to transpose a seat for an automotive vehicle along a fixed long rail for seat position adjustment, according to embodiments described herein. Directional references employed or shown in the description, figures, or claims, such as top, bottom, upper, lower, upward, downward, lengthwise, widthwise, left, right, and the like, are relative terms employed for ease of description and are not intended to limit the scope of the invention in any respect. Referring to the Figures, like numerals indicate like or corresponding parts throughout the several views.

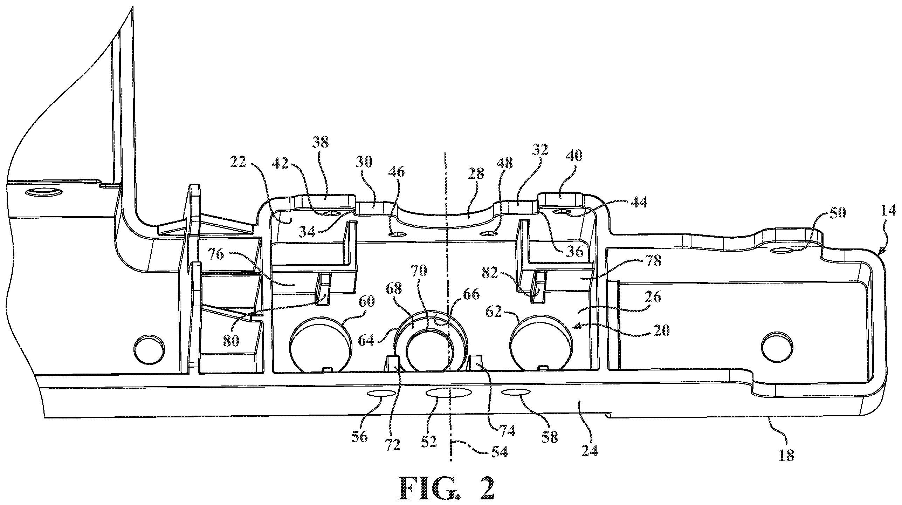

Referring to Figures 1 and 2, the power long rail assembly 12 includes a seat base 14 configured to support an automotive seat assembly (not shown) above the vehicle floor. The seat base 14 includes a center section 16 extending laterally between opposing side arms 18. The side arms 18 include a latch release cavity 20 bounded by laterally spaced apart inboard and outboard walls 22, 24 projecting from a base wall 26. Shown in Figure 2, the side arms 18 include a generally omega-shaped profile extending along an upper surface of the inboard walls 22 comprising an arcuate portion 28 extending between opposing support ledges 30, 32, generally vertical wall sections 34, 36 extending upward from the distal ends of the respective support ledges 30, 32, and mount sections 38, 40 extending generally horizontally away from the upper ends of the respective vertical wall sections 34, 36. In addition, the side arms 18 include spaced apart upper screw holes 42, 44 and spaced apart lower screw holes 46, 48 extending laterally through the inboard wall 22. Further, the side arms 18 also include a spring hole 50 extending laterally through the inboard wall 22. The side arms 18 also include a shaft hole 52 extending laterally through the outboard wall 24 and defining an axis of rotation 54. The axis of rotation 54 is aligned with the radial center of the arcuate portion 28 in the inboard wall 22. In addition, the side arms 18 include spaced apart threaded holes 56, 58 extending laterally through the outboard wall 24 with the shaft hole 52 spaced longitudinally between the threaded holes 56, 58.

The side arms 18 also include spaced apart plunger holes 60, 62 extending vertically through the base wall 26. In addition, the side arms 18 include a recessed cavity 64 extending vertically downward from the base wall 26 and spaced between the plunger holes 60, 62. The recessed cavity 64 has a generally cylindrical shape and includes an outer wall 66 extending circumferentially around a bottom wall 68. The recessed cavity 64 includes a passageway 70 extending axially through the bottom wall 68 such that the bottom wall 68 forms a ledge extending circumferentially around the passageway 70. The side arms 18 also include spaced apart guide ridges 72, 74 projecting from an inboard side of the outboard wall 24 and extending in a vertical direction. The shaft hole 52 is spaced between the guide ridges 72, 74. Further, the side arms 18 include interior walls 76, 78 projecting upward from the base wall 26 and spaced between the inboard and outboard walls 22, 24. Support ridges 80, 82 extend generally vertically along the outboard surface of the respective interior walls 76, 78.

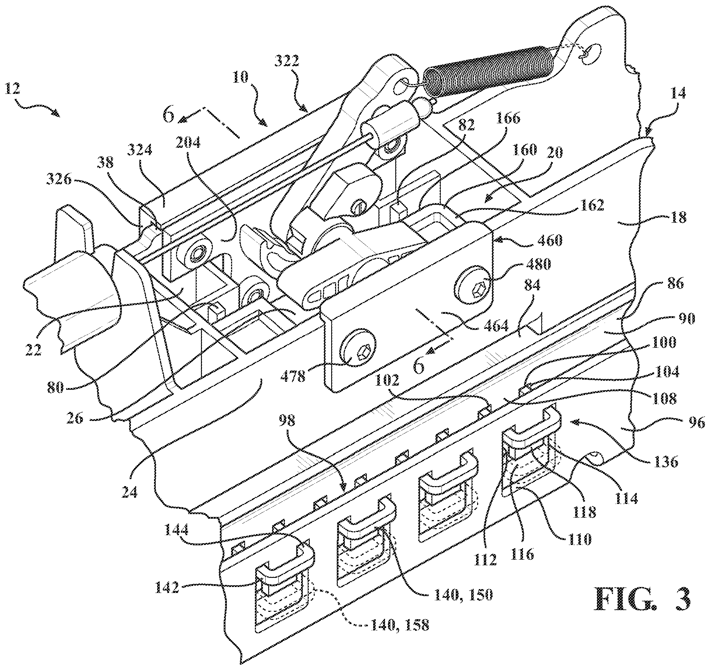

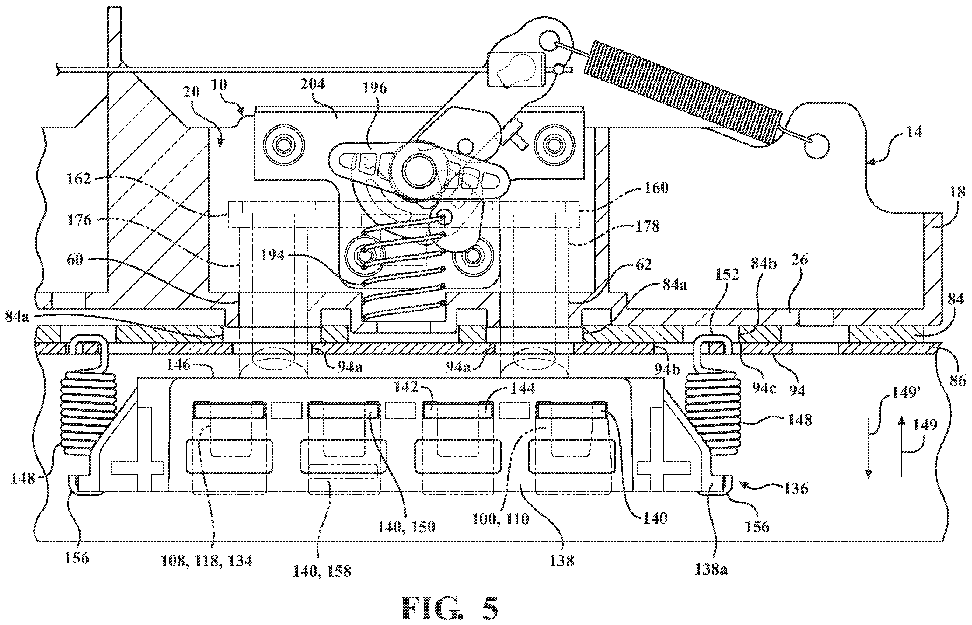

Referring to Figures 1 and 3, the power long rail assembly 12 also includes opposing base plates 84 having an elongated generally rectangular shape and configured to be fixedly coupled to the lower surface of the base wall 26 of the respective side arms 18. Referring to Figure 5, the base plates 84 includes spaced apart leg holes 84a extending vertically therethrough and configured to align with the plunger holes 60, 62 in the base walls 26 of the side arms 18 when the base plates 84 are assembled with the seat base 14. In addition, the base plates 84 includes additional clearance holes 84b extending vertically therethrough.

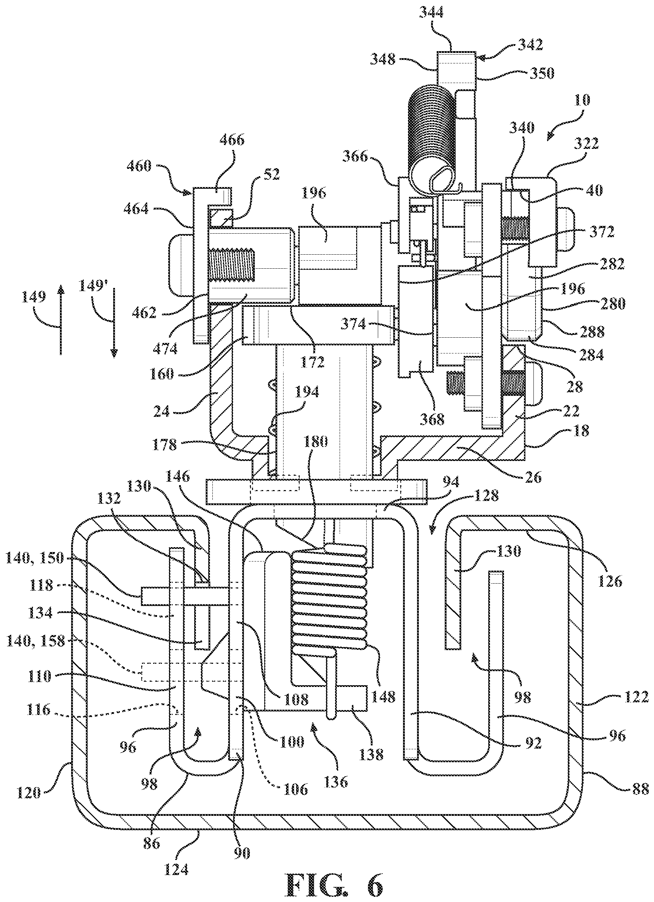

Depicted in Figure 1, the power long rail assembly 12 also includes laterally spaced apart upper channels 86 slidably coupled to respective long rails 88 and configured to be transposed along the long rails 88. Depicted in Figures 1 and 6, the upper channels 86 have a generally inverted U-shaped cross-sectional profile and extend in a longitudinal direction. The upper channels 86 include opposing first and second side walls 90, 92 and a top wall 94 extending laterally between the opposing first and second side walls 90, 92. Depicted in Figure 5, the top wall 94 of the upper channels 86 includes lower holes 94a extending vertically therethrough configured to align with the plunger holes 60, 62 in the base wall 26 of the side arm 18 and the leg holes 84a in the base plate 84 when the upper channels 86 are assembled with the seat base 14 and the base plate 84. In addition, the top wall 94 includes spaced apart spring holes 94b, 94c. Shown in Figures 3 and 6, a portion of the side walls 90, 92 is bent upward to form an outer channel wall(s) 96 spaced apart from the side wall 90, 92 and defining a generally U-shaped channel(s) 98 therebetween. A plurality of U-shape slots 100 is arranged in the side wall 90 and spaced apart in the longitudinal direction along the upper channel 86. The U-shaped slots 100 include opposing side slots 102, 104 extending from a slot base 106. Further, the U-shaped slots 100 include a tab 108 extending downward and bounded by the side slots 102, 104 and the slot base 106. The upper channel 86 also includes a second plurality of U-shaped slots 110 arranged in the outer channel wall 96 and configured to laterally align with the U-shaped slots 100 in the side wall 90. The U-shaped slots 110 include opposing side slots 112, 114 extending from a slot base 116. In addition, the U-shaped slots 110 include a tab 118 extending downward and bounded by the side slots 112, 114 and the slot base 116. It should be appreciated that the size, shape, and length of the upper channels 86 and the U-shaped slots 100, 110 may vary without altering the scope of the invention.

Referring to Figures 1 and 6, the long rails 88 are elongated channels having a generally U-shape cross-section in profile with opposing side walls 120, 122 extending upward from a bottom wall 124. The bottom wall 124 of the long rail 88 is configured to be fixedly attached to the vehicle floor. In addition, the long rails 88 include a top wall 126 extending between the opposing side walls 120, 122 with an elongated opening 128 extending in a longitudinal direction. The long rail 88 includes opposing flanges 130 extending downward from the top wall 126 and extending longitudinally along the elongated opening 128. At least one of the flanges 130 includes vertical notches or slots 132 spaced along the longitudinal length of the flange 130 and locking tabs 134 spaced between adjacent vertical slots 132. Alternatively, the vertical slots 132 might be replaced by notches and/or holes as desired for a specific application and latch configuration. Depicted in Figure 6, when the upper channel 86 is assembled with the long rail 88, the flanges 130 of the long rail 88 project downward within the respective U-shaped channels 98 and are spaced laterally between the side walls 90, 92 and the outer channel wall(s) 96 of the upper channel 86. It should be appreciated that the size, shape, and length of the long rails 88 and the slots 132 may vary without altering the scope of the invention.

Depicted in Figure 1, the side arms 18 are fixedly coupled to the respective upper channels 86 with the base plates 84 spaced vertically between the base wall 26 of the side arms 18 and the top wall 94 of the upper channels 86. The upper channels 86 are configured to be transposable along the respective long rails 88 via a power drive assembly (not shown) or by manually repositioning the seat assembly attached to the seat base 14, as is commonly known in the art.

Shown in Figure 1, the power long rail assembly 12 also includes opposing loop latches 136 configured to lock the upper channels 86 to the respective long rails 88 so that the vehicle seat assembly is retained in any one of its seat positions during use and system loading events. Referring to Figures 3, 5 and 6, the loop latch 136 includes a latch retainer 138 with a plurality of generally U-shaped loops 140 having loop side portions 142, 144 extending laterally through the U-shaped slots 100 in the side wall 90 of upper channel 86 and through the U-shaped slots 110 in the outer channel wall 96 of upper channel 86. The embodiment shown in Figures 3 and 5 includes four U-shaped loops 140, however, any suitable number of U-shaped loops 140 may be used without altering the scope of the invention. The loop latch 136 is alternatively described as a "4-loop" latch. Optionally, the U-shaped loops 140 can be replaced by one or more fingers, a plate, and/or pins. Depicted in Figures 5 and 6, the latch retainer 138 further includes a release trigger 146 extending along an upper surface for disengaging the loop latch 136 from the long rail 88.

The loop latch 136 also includes spaced apart coil springs 148 which spring-bias the latch retainer 138 upwardly (arrow 149) towards a locked position 150, shown in Figures 5 and 6. In the locked position 150, the U-shaped loops 140 are vertically positioned such that the tabs 108, 118 in the upper channel 86 extend vertically downward between the loop side portions 142, 144. While in the locked position 150, the loop latch 136 is positioned such that the loop side portions 142, 144 extend through the vertical slots 132 in the long rail 88 with the locking tabs 134 in the long rail 88 extending vertically through the U-shaped loops 140 and/or vertically between adjacent loop side portions 142, 144. The coil springs 148 spring-bias the latch retainer 138 and the U-shaped loops 140 upward (arrow 149) towards an engaged condition with the upper ends of the U-shaped slots 100, 110 in the upper channel 86, as shown in Figure 5. Movement of the upper channel 86 along the long rail 88 is prevented by the engagement between the tabs 108, 118 in the upper channel 86 and the locking tabs 134 in the long rail 88 with the U-shaped loops 140. When the U-shaped loops 140 are engaged with the vertical slots 132 in the flanges 130 of the long rail 88, the upper channel 86 and the attached seat base 14 are locked to the long rail 88 such that the seat base 14 is retained in any one of the seat positions during system loading events.

Referring to Figure 5, during assembly of the loop latch 136, upper ends 152 of the coil springs 148 are inserted through spring holes 94b, 94c in the top wall 94 of the upper channel 86 and through the clearance holes 84b in the base plate 84 to fixedly couple the upper spring ends 152 to the top wall 94. In addition, lower ends 156 of the coil springs 148 are fixedly coupled to a lower portion 138a of the latch retainer 138.

The U-shaped loops 140 of loop latch 136 are shown in an unlocked position 158 in Figures 3, 6 and 20. In the unlocked position 158, the U-shaped loops 140 are spaced vertically apart from the tabs 108, 118 in the upper channel 86 and spaced vertically apart from the locking tabs 134 in the long rail 88. The upper channel 86 is transposable along the long rail 88 while the U-shaped loops 140 are disengaged from tabs 108, 118 and the locking tabs 134. When the U-shaped loops 140 are moved to the unlocked position 158 with respect to the locking tabs 134 in the flanges 130 of the long rail 88, the upper channel 86 and the attached seat base 14 are repositionable along the long rails 88. It will be appreciated that the U-shaped loops 140 might maintain engagement with the tabs 108, 118 in the upper channel 186 while the U-shaped loops 140 are vertically spaced apart from the locking tabs 134 in the long rail 88 without altering the scope of the present invention.

Depicted in Figure 1, the power long rail assembly 12 also includes a loop latch release 10 mounted in the latch release cavity 20 in each of the side arms 18. The loop latch release 10 is operatively coupled to the adjacent loop latch 136 and configured to automatically disengage the loop latch 136 from the long rail 88 and unlock the seat base 14 from the long rails 88. The loop latch release 10 in combination with the loop latch 136 is alternatively described as a loop latch mechanism 10, 136.

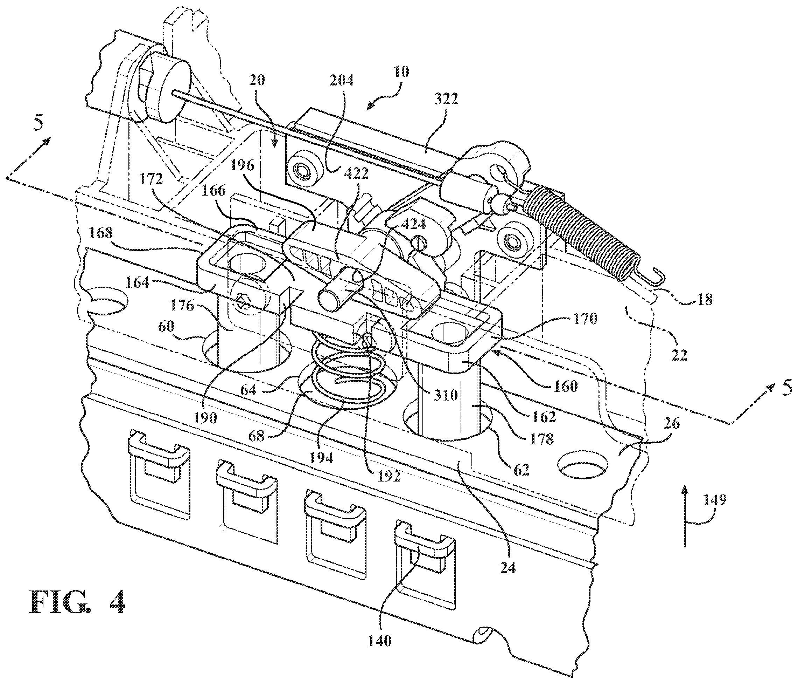

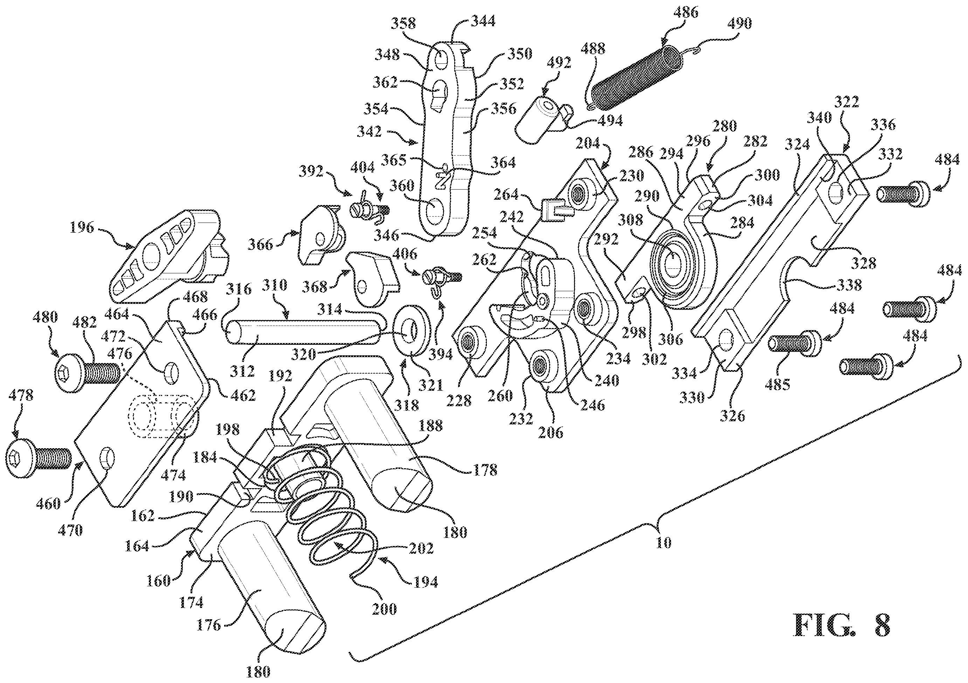

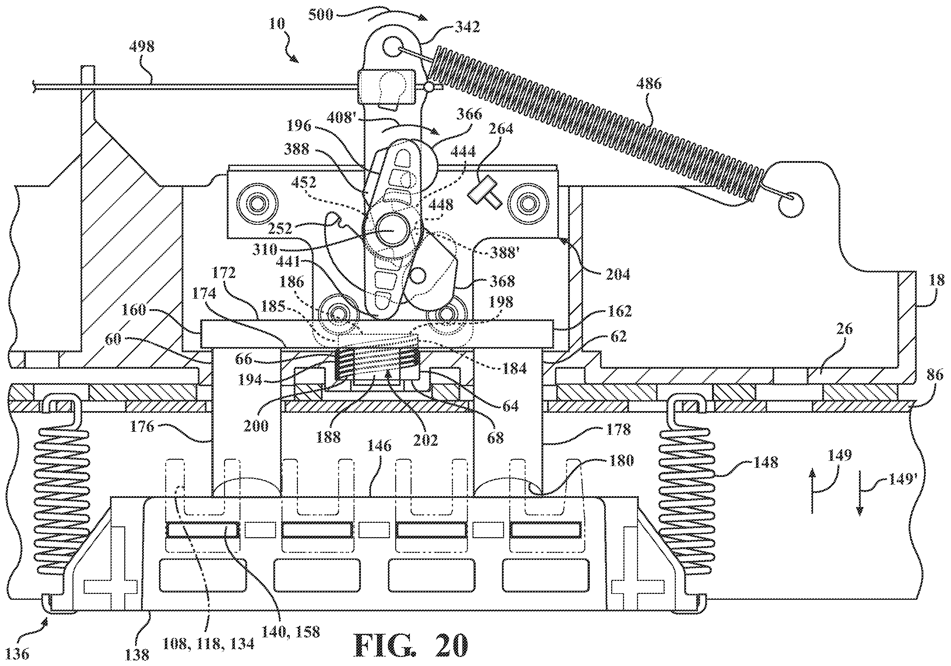

Referring to Figures 3-8, the loop latch release 10 includes a plunger 160 configured to disengage the loop latch 136. Depicted in Figure 5, the plunger 160 is configured to reposition the latch retainer 138 downward (arrow 149'), repositioning the U-shaped loops 140 from the locked position 150 to the unlocked position 158. Depicted in Figures 4 and 8, the plunger 160 includes a top plate 162 having a generally rectangular shape with opposing sides 164, 166 and opposing ends 168, 170 extending between a top surface 172 and an opposing bottom surface 174. Projecting downward from the bottom surface 174 are spaced apart legs 176, 178 having a generally cylindrical shape and a tapered end forming an actuating surface 180. As shown in Figure 5, the legs 176, 178 are sized and shaped to extend through the respective plunger holes 60, 62 in the base wall 26 of the latch release cavity 20 in the side arms 18. In addition, the legs 176, 178 extend through the holes 84a, 94a in the base plate 84 and the top wall 94 of the upper channel 86, respectively. Referring to Figures 6 and 20, the actuating surface 180 is configured to frictionally engage with the release trigger 146 on the latch retainer 138 as the plunger 160 is transposed downward (arrow 149'). The coil springs 148 spring-bias the release trigger 146 of the latch retainer 138 upward (arrow 149) towards an engaged condition with the actuating surfaces 180 of the plunger legs 176, 178 when the plunger 160 is assembled with the loop latch 136.

Depicted in Figures 8 and 20, the plunger 160 also includes a recessed cavity 184 in the bottom surface 174 of the top plate 162 having a generally cylindrical sidewall 185 extending downward from a cavity base 186. In addition, the plunger 160 includes a spring boss 188 projecting downward from the cavity base 186 and projecting outward of the recessed cavity 184. The recessed cavity 184 is spaced between the legs 176, 178 on the top plate 162. The spring boss 188 has an outer diameter less than an inner diameter of the recessed cavity 64 in the base wall 26 of the side arm 18. In addition, the spring boss 188 has a longitudinal axis generally aligned with the longitudinal axis of the recessed cavity 64 in the base wall 26 when the plunger 160 is assembled with the side arm 18 with the plunger legs 176, 178 extending at least partially through the plunger holes 60, 62. Referring to Figures 4, 7, and 8, the side 164 of the top plate 162 includes spaced apart alignment notches 190, 192 extending generally vertically between the top surface 172 and the bottom surface 174 (Figure 8). The alignment notches 190, 192 are configured to matingly engage with the respective guide ridges 72, 74 in the side arm 18 when the plunger 160 is assembled with the side arm 18. When assembled, the inboard side 166 of the top plate 162 is adjacent the support ridges 80, 82 in the latch release cavity 20, as illustrated in Figure 3.

Depicted in Figures 4, 8 and 20, the loop latch release 10 also includes a return spring 194 configured to spring-bias the plunger 160 upward (arrow 149) towards an engaged condition with a rotating cam 196, which is further described below. The return spring 194 is a coiled compression spring having an upper end 198, a lower end 200, and a passageway 202 extending axially therethrough. The upper end 198 of the return spring 194 is positioned in the recessed cavity 184 in the top plate 162 of the plunger 160 with the spring boss 188 extending at least partially into the passageway 202 through the return spring 194, as depicted in Figure 20. In addition, the lower end 200 of the return spring 194 is positioned in the recessed cavity 64 in the base wall 26 of the side arm 18.

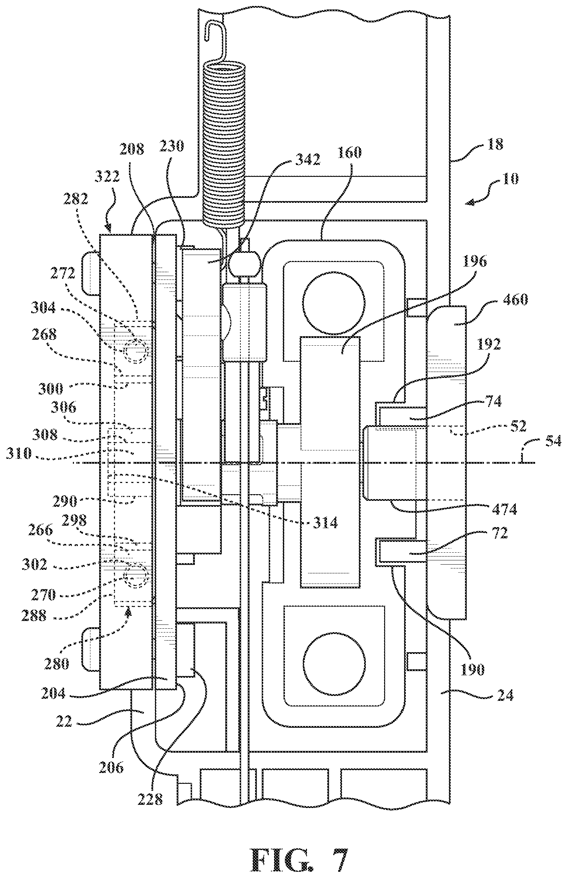

Depicted in Figures 3-10, the loop latch release 10 also includes a mounting bracket 204 configured to be fixedly coupled to the inboard wall 22 within the latch release cavity 20. Referring to Figures 7-10, the mounting bracket 204 is a generally T-shaped bracket having opposing front and rear surfaces 206, 208 and a contoured wall 210 extending between the front and rear surfaces 206, 208. The contoured wall 210 includes a top portion 212, outer portions 214, 216, mid portions 218, 220, inner portions 222, 224, and a bottom portion 226. The top portion 212, the mid portions 218, 220, and the bottom portion 226 extend in a longitudinal direction with the mid portions 218, 220 spaced vertically between the top portion 212 and the bottom portion 226. The outer portions 214, 216 and the inner portions 222, 224 extend in a generally vertical direction with the inner portions 222, 224 spaced longitudinally between the outer portions 214, 216. The top portion 212 extends between the upper ends of the outer portions 214, 216. The lower ends of the outer portions 214, 216 adjoin the respective distal ends of the mid portions 218, 220. The proximal ends of the mid portions 218, 220 adjoin the respective upper ends of the inner portions 222, 224. In addition, the bottom portion 226 extends between the lower ends of the inner portions 222, 224.

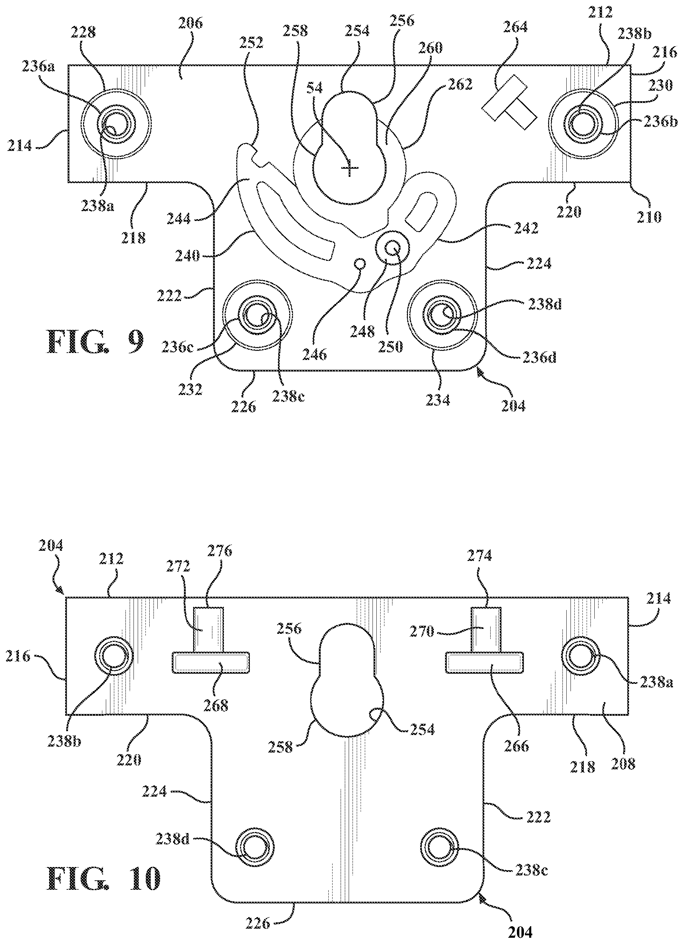

Referring to Figures 8 and 9, the mounting bracket 204 includes spaced apart upper bosses 228, 230 and spaced apart lower bosses 232, 234 projecting away from the front surface 206. The upper bosses 228, 230 include respective threaded inserts 236a, 236b having a threaded passageway 238a, 238b extending laterally therethrough. The threaded passageways 238a, 238b are positioned on the mounting bracket 204 such that the threaded passageways 238a, 238b laterally align with the respective upper screw holes 42, 44 (Figure 2) on the inboard wall 22 of the side arms 18 when the rear surface 208 of the mounting bracket 204 is attached to the inboard wall 22. The lower bosses 232, 234 include respective threaded inserts 236c, 236d having a threaded passageway 238c, 238d extending laterally therethrough. The threaded passageways 238c, 238d are positioned on the mounting bracket 204 such that the threaded passageways 238c, 238d laterally align with the respective lower screw holes 46, 48 (Figure 2) on the inboard wall 22 of the side arms 18 when the rear surface 208 of the mounting bracket 204 is attached to the inboard wall 22.

The mounting bracket 204 also includes a curved block 240 having a generally arcuate shape with a peripheral wall 242 projecting from the front surface 206 and terminating at an end face 244. The mounting bracket 204 also includes a spring pin 246 projecting outward from the end face 244 and a threaded insert 248 insert-molded into the curved block 240 and having a threaded passageway 250 extending at least partially through the curved block 240. The peripheral wall 242 includes a forward stop 252 extending along an upper forward portion of the peripheral wall 242. Further, the mounting bracket 204 includes a keyhole slot 254 extending between the front and rear surfaces 206, 208 and having a slot portion 256 extending from a generally circular portion 258. The keyhole slot 254 is positioned between the top portion 212 and the curved block 240. The circular portion 258 has a radial center configured to generally align with the axis of rotation 54 when the rear surface 208 of the mounting bracket 204 is attached to the inboard wall 22 of the side arm 18 with the threaded passageways 238a-238d generally aligned with the respective upper and lower screw holes 42, 44, 46, 48. In addition, the mounting bracket 204 includes a recessed channel 260 extending circumferentially around the circular portion 258 of the keyhole slot 254. The mounting bracket 204 also includes a channel wall 262 projecting from the recessed channel 260 and adjoining the front surface 206. The mounting bracket 204 further includes a rearward stop 264 projecting from the front surface 206. Referring to Figures 7 and 10, the mounting bracket 204 includes spaced apart ledges 266, 268 projecting away from the rear surface 208 and spaced vertically between the top portion 212 and the mid portions 218, 220 with the keyhole slot 254 spaced between the ledges 266, 268. The ledges 266, 268 are sized and shaped to frictionally engage with the respective support ledges 30, 32 (Figure 2) on the inboard wall 22 when the mounting bracket 204 is assembled with the inboard wall 22. The mounting bracket 204 also includes locator pins 270, 272 projecting vertically upward from an upper surface of the respective ledges 266, 268. Further, the locator pins 270, 272 have pin ends 274, 276 spaced vertically below the top portion 212 of the mounting bracket 204. It will be appreciated the shape and size of the mounting bracket 204 may vary without altering the scope of the present invention.

Depicted in Figures 6-8, the loop latch release 10 also includes a bearing assembly 280 comprising a bearing frame 282 having a generally omega-shape with a generally cylindrical portion 284 extending between opposing front and rear faces 286, 288. The cylindrical portion 284 includes a bearing hole 290 extending axially therethrough and having a longitudinal axis configured to align with the axis of rotation 54 after the bearing assembly 280 is assembled as part of the loop latch release 10. In addition, the bearing frame 282 includes opposing bosses 292, 294 extending generally tangentially away from the cylindrical portion 284 and including a top surface 296 opposing boss mounting surfaces 298, 300. In addition, the bearing frame 282 includes spaced apart pin holes 302, 304 extending between the respective boss mounting surfaces 298, 300 and the top surface 296. The bearing frame 282 is configured to be assembled with the mounting bracket 204 with the boss mounting surfaces 298, 300 frictionally engaged with the upper surface of the respective ledges 266, 268 and the locator pins 270, 272 extending at least partially through the respective pin holes 302, 304 in the bearing frame 282, as illustrated in Figure 7. Referring to Figures 2 and 6-8, the lower surface of the cylindrical portion 284 of the bearing frame 282 is configured to matingly engage with the arcuate portion 28 of the inboard wall 22 with the ledges 266, 268 of the mounting bracket 204 spaced vertically between the boss mounting surfaces 298, 300 and the respective support ledges 30, 32.

Shown in Figures 7 and 8, the bearing assembly 280 also includes a bearing 306 having an aperture 308 extending axially therethrough. The bearing 306 has an outer circumference configured to be inserted into the bearing hole 290 in the bearing frame 282. When assembled as part of the loop latch release 10, the bearing aperture 308 has a longitudinal axis generally aligned with the axis of rotation 54.

Depicted in Figure 8, the loop latch release 10 also includes a shaft 310 having a generally cylindrical shape with a cylindrical surface 312 extending between inboard and outboard ends 314, 316. The shaft 310 has an outer diameter sized and shaped to matingly engage with the bearing aperture 308 in the bearing 306 such that the shaft 310 is pivotably coupled to the bearing 306. In addition, the loop latch release 10 includes a bushing 318 having an opening 320 extending axially therethrough and a rim 321 extending around the opening 320. The opening 320 in the bushing 318 has an inner diameter greater than the outer diameter of the shaft 310 such that the shaft 310 might be inserted into the opening 320 in the bushing 318, as depicted in Figure 7.

Referring to Figure 8, the loop latch release 10 also includes a rear plate 322 having a generally L-shape cross-section in profile with a top flange 324 projecting at generally a right angle from a rear bracket 326. The rear bracket 326 includes a recessed central portion 328 spaced between end bosses 330, 332 which have clearance holes 334, 336 extending laterally therethrough. The clearance holes 334, 336 are sized and shaped to align with the respective threaded passageways 238a, 238b when the rear plate 322 is assembled with the mounting bracket 204. In addition, the rear bracket 326 includes a cutout 338 along a lower edge having a semi-circular shape and configured to provide clearance for the bearing 306 when the rear plate 322 is assembled as part of the loop latch release 10. Further, the top flange 324 includes a lower surface 340 configured to frictionally engage with the mount sections 38, 40 of the inboard wall 22 (Figure 2) of the side arm 18 when assembled with the inboard wall 22, as depicted in Figures 3 and 6.

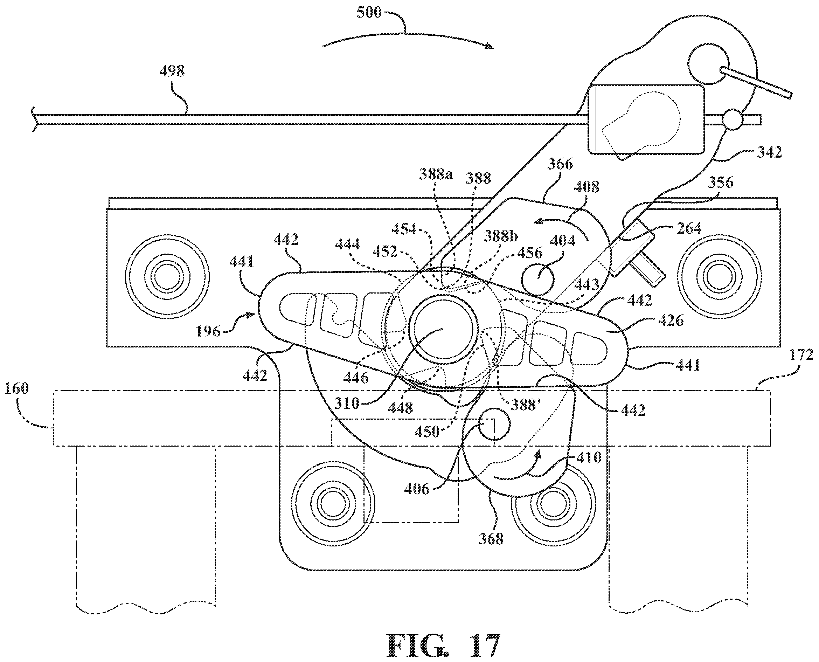

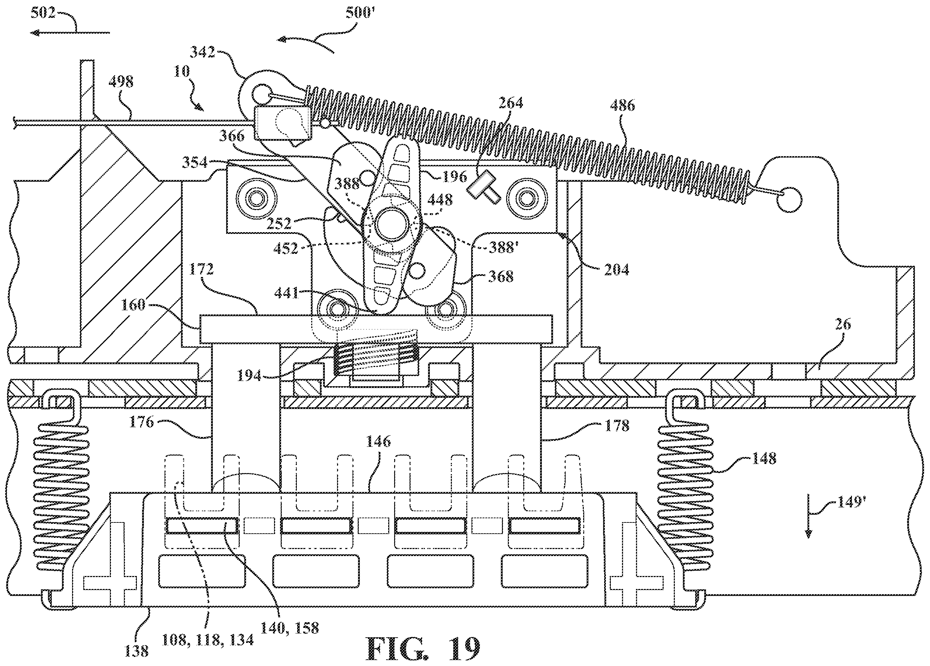

Depicted in Figures 6 and 8, the loop latch release 10 also includes a lever arm 342 having an elongated shape extending between a distal end 344 and a proximal end 346, a front surface 348 opposing a rear surface 350, and a contoured perimeter wall 352 extending around the circumference of the lever arm 342 and extending between the front and rear surfaces 348, 350. The lever arm 342 also includes a front stop 354 extending along a front portion of the perimeter wall 352 configured to frictionally engage with the forward stop 252 on the mounting bracket 204, as shown in Figure 19. In addition, the lever arm 342 includes a rear stop 356 extending along a rear portion of the perimeter wall 352 configured to frictionally engage with the rearward stop 264 on the mounting bracket 204, as shown in Figure 17. Thus, the forward stop 252 and the rearward stop 264 define a rotational range of motion of the lever arm 342 as the lever arm 342 rotates about the shaft 310.

Referring to Figure 8, the lever arm 342 also includes a spring hole 358 extending between the front and rear surfaces 348, 350 adjacent the distal end 344 of the lever arm 342. In addition, the lever arm 342 includes a pivot hole 360 extending therethrough adjacent the proximal end 346 of the lever arm 342. The pivot hole 360 is sized and shaped to pivotably couple with the shaft 310 when assembled as part of the loop latch release 10. The lever arm 342 also includes a cable slot 362 having a generally keyhole shape and positioned adjacent the spring hole 358 and spaced between the pivot hole 360 and the spring hole 358. Further, the lever arm 342 includes an offset pin 364 projecting from the front surface 348 of the lever arm 342 adjacent the pivot hole 360 and spaced between the pivot hole 360 and the cable slot 362. The lever arm 342 also includes a screw hole 365 extending inward from the front surface 348 and spaced between the offset pin 364 and the cable slot 362. It will be appreciated that the size, relative placement, and shape of the spring hole 358, the pivot hole 360, the cable slot 362, the offset pin 364, the screw hole 365, as well as the lever arm 342 might vary without altering the scope of the present invention.

Depicted in Figure 8, the loop latch release 10 includes an arm pawl 366 and a bracket pawl 368. The arm pawl 366 and the bracket pawl 368 might be essentially identical parts, as shown in Figure 8. However, it will be appreciated that the size, shape, position, and the like of the arm pawl 366 and/or the bracket pawl 368 might vary without altering the scope of the present invention. Referring to Figures 6, 11, and 12, the pawls 366, 368 include an outer wall 370 extending between front and rear surfaces 372, 374. In addition, the pawls 366, 368 include a pivot aperture 376 extending between the front and rear surfaces 372, 374 and defining an axis of rotation 378 of the pawls 366, 368. The pawls 366, 368 also include a spring cavity 380 having a mouth opening 382 along the outer wall 370 and a tail opening 384 spaced apart from the mouth opening 382 with the spring cavity 380 adjoining the pivot aperture 376 extending laterally through the pawls 366, 368. The spring cavity 380 includes an interior wall 386 adjacent the tail opening 384. In addition, the pawls 366, 368 include a tooth segment 388, 388' having an upper face 388a extending at an acute angle from a lower face 388b.

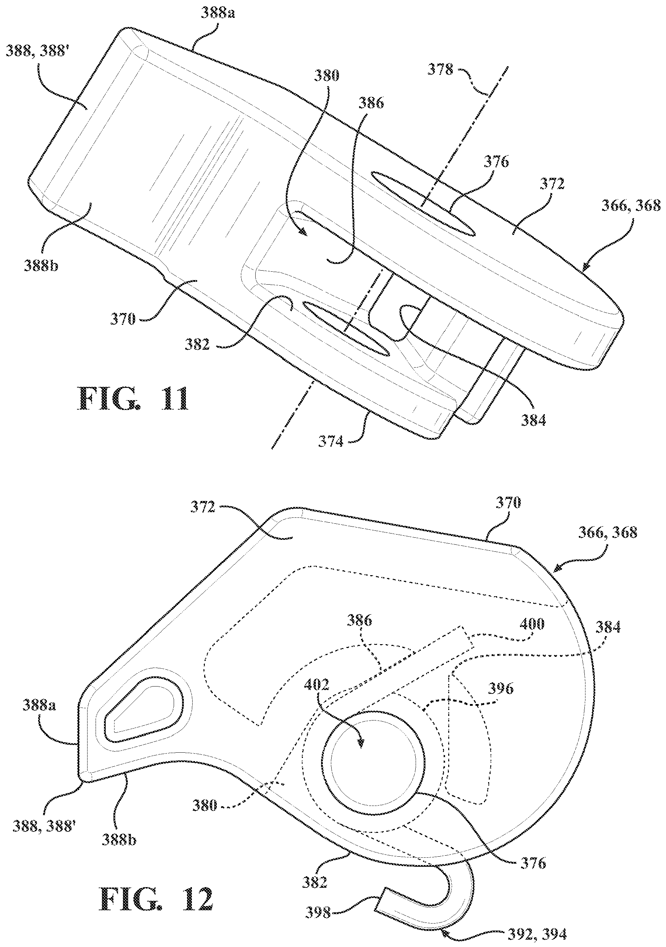

Referring to Figure 8, the loop latch release 10 also includes an arm pawl spring 392 and a bracket pawl spring 394. The arm pawl spring 392 and the bracket pawl spring 394 might be essentially identical parts, as shown in Figure 8. However, it will be appreciated that the size, shape, position, and the like of the arm pawl spring 392 and/or the bracket pawl spring 394 might vary without altering the scope of the present invention. Depicted in Figure 12, the pawl springs 392, 394 are coiled springs having a spring coil 396 with a hook end 398, a straight end 400, and a passageway 402 extending through the spring coil 396. The pawl springs 392, 394 are sized and shaped such that the spring coil 396 might be inserted into the spring cavity 380 in the respective pawl 366, 368 with the passageway 402 through the spring coil 396 aligned with the pivot aperture 376, the straight end 400 inserted through the tail opening 384, and the hook end 398 projecting through the mouth opening 382. In operation, the straight end 400 of the pawl spring 392, 394 frictionally engages with the interior wall 386 within the spring cavity 380.

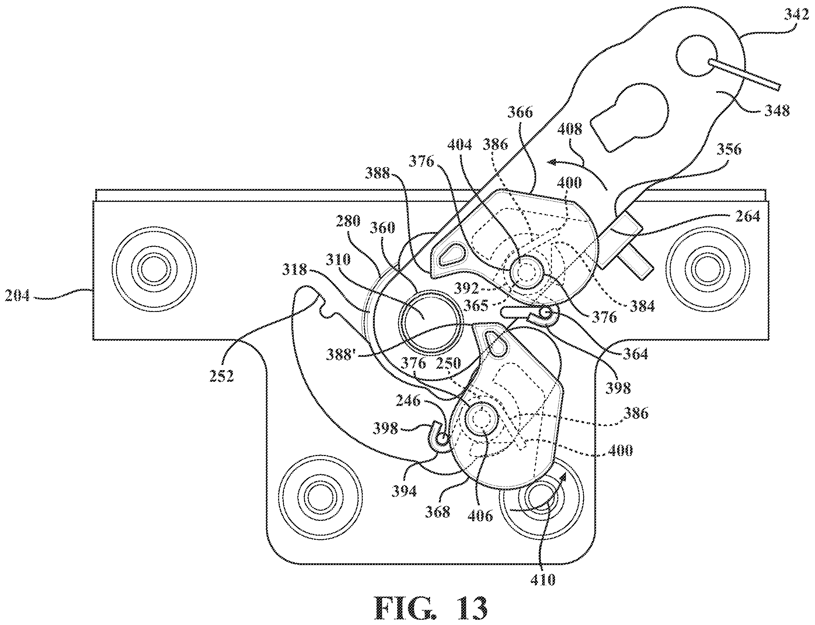

Depicted in Figure 8, the loop latch release 10 also includes an arm screw 404 and a bracket screw 406 for attaching the arm pawl 366 and the bracket pawl 368 to the lever arm 342 and the mounting bracket 204, respectively. Referring to Figures 12 and 13, the arm pawl 366 and the arm pawl spring 392 are assembled to the lever arm 342 by inserting a threaded end of the arm screw 404 through the pivot aperture 376 in the arm pawl 366 and through the passageway 402 in the arm pawl spring 392 after the arm pawl spring 392 is inserted into the spring cavity 380 of the arm pawl 366. Next, the threaded end of the arm screw 404 is fixedly coupled to the screw hole 365 in the lever arm 342. Further, the hook end 398 of the arm pawl spring 392 is operatively coupled to the offset pin 364 projecting from the lever arm 342. After assembly with the lever arm 342, the straight end 400 of the arm pawl spring 392 engages with the interior wall 386 in the spring cavity 380 of the arm pawl 366 and spring-biases the arm pawl 366 about the arm screw 404 in a counterclockwise direction (arrow 408), as viewed in Figure 13.

Referring to Figures 12 and 13, the bracket pawl 368 and the bracket pawl spring 394 are assembled to the mounting bracket 204 by inserting a threaded end of the bracket screw 406 through the pivot aperture 376 in the bracket pawl 368 and through the passageway 402 in the bracket pawl spring 394 after the bracket pawl spring 394 is inserted into the spring cavity 380 of the bracket pawl 368. Next, the threaded end of the bracket screw 406 is fixedly coupled to the threaded passageway 250 in the mounting bracket 204. Further, the hook end 398 of the bracket pawl spring 394 is operatively coupled to the spring pin 246 projecting from the mounting bracket 204. After assembly with the mounting bracket 204, the straight end 400 of the bracket pawl spring 394 engages with the interior wall 386 in the spring cavity 380 within the bracket pawl 368 and spring-biases the bracket pawl 368 about the bracket screw 406 in a counterclockwise direction (arrow 410), as viewed in Figure 13.

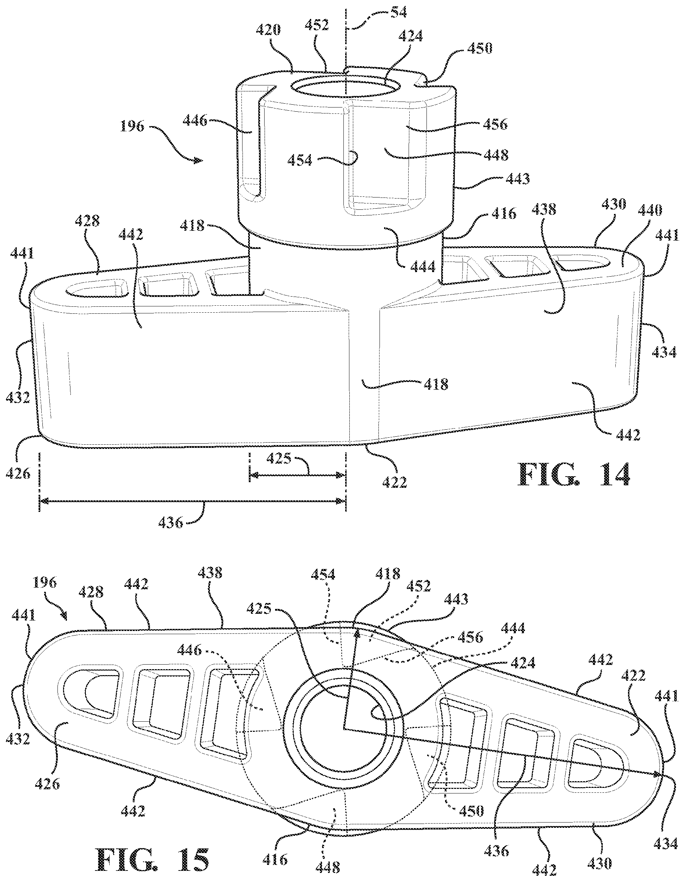

The rotating cam 196 is shown in Figures 14 and 15. Referring to Figure 14, the rotating cam 196 includes a cam shaft 416 having an outer surface 418 extending in a longitudinal direction between opposing inboard and outboard ends 420, 422. The cam shaft 416 also includes a shaft aperture 424 extending longitudinally therethrough and having a longitudinal axis configured to align with the axis of rotation 54. In addition, the outer surface 418 of the cam shaft 416 has an approximate shaft radius 425 as measured from the longitudinal axis of shaft aperture 424. The shaft aperture 424 is sized and shaped to pivotably couple with the shaft 310 when the shaft 310 is inserted into the shaft aperture 424 during assembly of the loop latch release 10, as depicted in Figure 4. Shown in Figures 14 and 15, the rotating cam 196 includes a cam 426 having opposing cam wings 428, 430 projecting radially away from the outer surface 418 of the cam shaft 416 adjacent the outboard end 422. The cam wings 428, 430 include respective distal ends 432, 434 extending a cam radial distance 436 from longitudinal axis of shaft aperture 424. The cam radial distance 436 is greater than the shaft radius 425. The cam 426 has a generally oblong shape with an engagement surface 438 extending in a longitudinal direction between the outboard end 422 and an opposing rear face 440 and extending around an outer periphery of the cam 426. The engagement surface 438 includes actuating portions 441 having a curved profile located at the distal ends 432, 434. The engagement surface 438 also includes cam side portions 442 extending between the actuating portions 441 and the outer surface 418 of the cam shaft 416, as viewed from the outboard end 422.

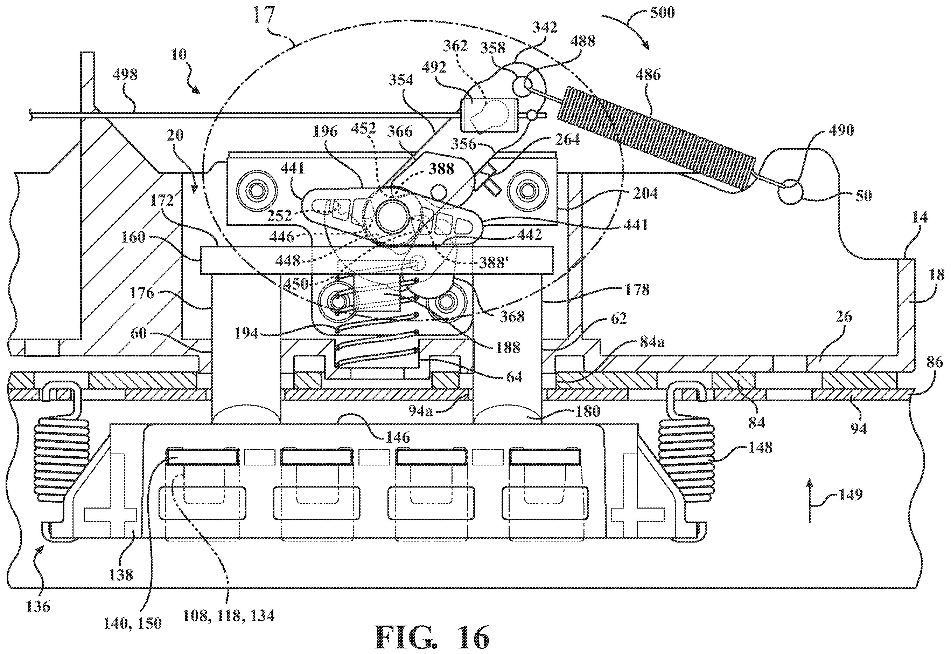

Depicted in Figures 14 and 15, the rotating cam 196 includes a ratchet gear 443 at the inboard end 420 of the cam shaft 416 having a longitudinal axis aligned with the longitudinal axis of the shaft aperture 424. The ratchet gear 443 includes an outer surface 444 extending in a circumferential direction. The outer surface 444 includes a plurality of notches 446, 448, 450, 452 spaced circumferentially along the outer surface 444. Each of the notches 446, 448, 450, 452 includes a leading surface 454 adjoining a trailing surface 456. In the embodiment shown in Figure 15, the ratchet gear 443 includes four equally spaced apart notches 446, 448, 450, 452 with each notch 446, 448, 450, 452 corresponding to approximately 90° rotation of the ratchet gear 443. The notches 446, 448, 450, 452 are sized and shaped to meshingly engage with the tooth segments 388, 388' on the pawls 366, 368, as illustrated in Figure 16. The upper and lower faces 388a, 388b of the tooth segments 388, 388' frictionally engage with the respective leading and trailing surfaces 454, 456 of the notch 446, 448, 450, 452 when a tooth segment 388, 388' is engaged with one of the notches 446, 448, 450, 452.

Depicted in Figure 8, the loop latch release 10 also includes a front plate 460 having a generally rectangular shape, opposing inboard and outboard sides 462, 464, and a flange 466 extending along a top surface 468 and projecting laterally away from the inboard side 462. In addition, the front plate 460 includes spaced apart screw holes 470, 472 extending between the inboard and outboard sides 462, 464. The front plate 460 includes a shaft boss 474 spaced between the screw holes 470, 472 and projecting away from the inboard side 462 and including a recessed hole 476. The loop latch release 10 also includes front screws 478, 480 having threaded shafts 482 configured to be inserted into the respective screw holes 470, 472 in the front plate 460 during assembly. Referring to Figures 2, 3, and 6, the front plate 460 is configured to be assembled with the inboard side 462 abutting the outboard wall 24 of the side arm 18 and the outboard side 464 facing away from the outboard wall 24 with the screw holes 470, 472 on the front plate 460 aligned with the respective threaded holes 56, 58 on the outboard wall 24 and the shaft boss 474 projecting into the shaft hole 52 in the outboard wall 24. In addition, the recessed hole 476 is configured such that the longitudinal axis of the recessed hole 476 aligns with the axis of rotation 54 after the front plate 460 is assembled with the outboard wall 24 of the side arm 18. The front screws 478, 480 are configured such that the threaded shafts 482 meshingly engage with the respective threaded holes 56, 58 during assembly.

Also shown in Figure 8, the loop latch release 10 includes a plurality of bracket screws 484 having threaded shafts 485 configured to meshingly engage with the respective threaded passageways 238a-238d in the mounting bracket 204. In addition, the loop latch release 10 includes an extension spring 486 having opposing hook ends 488, 490. The loop latch release 10 also includes a cable attachment 492 having a keyed feature 494 configured to be inserted into the cable slot 362 in the lever arm 342. Referring to Figure 1, the power long rail assembly 12 also includes an actuator 496 operatively connected to opposing latch release cables 498. The actuator 496 is configured to selectively actuate opposing latch release cables 498 by applying tension to the latch release cables 498, as is commonly known in the art. The actuator 496 is fixedly coupled to the center section 16 of the seat base 14 with the latch release cables 498 routed to the respective side arms 18.

The assembly of each of the loop latch releases 10 with the power long rail assembly 12 is described below. For simplicity, the seat base 14 is presumed to be pre-assembled with the base plates 84, the upper channels 86, and the long rails 88, as shown in Figure 1. Further, it is presumed that the actuator 496 and the latch release cables 498 are pre-assembled to the seat base 14. In addition, it is presumed that the loop latches 136 are pre-assembled with the upper channels 86 by connecting the upper ends 152 of the coil springs 148 to the spring holes 94b in the top walls 94 of the respective upper channels 86, connecting the lower ends 156 to the lower portion 138a of the respective latch retainers 138, and by assembling the U-shaped loops 140 with the respective latch retainers 138, as depicted in Figure 16. It will be appreciated that the order of assembly of components of the power long rail assembly 12 and of the loop latch release 10 might vary without altering the scope of the present invention.

Referring to Figure 16, to assemble the loop latch release 10 with the seat base 14, the return spring 194 is inserted into the recessed cavity 64 in the base wall 26 of the side arm 18 within the latch release cavity 20. Next, the plunger 160 is inserted into the latch release cavity 20 by inserting the lower portion of the plunger legs 176, 178 into the respective plunger holes 60, 62 in the base wall 26 with the spring boss 188 inserted into the passageway 202 through the return spring 194. The plunger legs 176, 178 are also inserted into the leg holes 84a in the base plate 84 and into the lower holes 94a in the top wall 94 of the upper channel 86 with the alignment notches 190, 192 slidably engaged with the respective guide ridges 72, 74 on the outboard wall 24 of the side arm 18, as depicted in Figures 7 and 16. In addition, the front plate 460 is assembled to the outboard wall 24 by inserting the shaft boss 474 into the shaft hole 52 in the outboard wall 24, inserting the threaded ends 482 of the front screws 478, 480 into the respective screw holes 470, 472 in the front plate 460, and fixedly coupling the threaded ends 482 to the respective threaded holes 56, 58 in the outboard wall 24.

Next, as depicted in Figure 13, the mounting bracket 204 is assembled with the bracket pawl 368 by inserting the bracket pawl spring 394 into the spring cavity 380 in the bracket pawl 368 and connecting the hook end 398 of the bracket pawl spring 394 to the spring pin 246 projecting from the mounting bracket 204. Next, the bracket screw 406 is inserted into the pivot aperture 376, through the passageway 402 in the bracket pawl spring 394, and fixedly coupled to the threaded passageway 250 in the mounting bracket 204. In addition, the shaft 310 is assembled with the bearing assembly 280 by inserting the inboard end 314 of the shaft 310 into the bearing aperture 308 in the bearing assembly 280, as shown in Figure 7.

After the shaft 310 is assembled with the bearing assembly 280 and the bracket pawl 368 is assembled with the mounting bracket 204, the outboard end 316 of the shaft 310 is inserted into the keyhole slot 254 in the mounting bracket 204 and the locator pins 270, 272 are inserted into the respective pin holes 302, 304 in the bearing frame 282 causing the boss mounting surfaces 298, 300 to engage with the respective ledges 266, 268 on the mounting bracket 204. Next, the outboard end 316 of the shaft 310 is inserted through the opening 320 in the bushing 318 until the bushing rim 321 abuts the recessed channel 260 in the mounting bracket 204.

Next, the lever arm 342 is assembled with the arm pawl 366 by inserting the arm pawl spring 392 into the spring cavity 380 in the arm pawl 366 and connecting the hook end 398 of the arm pawl spring 392 to the offset pin 364, as depicted in Figure 13. The arm screw 404 is inserted into the pivot aperture 376, through the passageway 402 in the arm pawl spring 392, and fixedly coupled to the screw hole 365 in the lever arm 342. After the lever arm 342 is assembled with the arm pawl 366, the outboard end 316 of the shaft 310 is inserted through the pivot hole 360 in the lever arm 342 with the rear surface 350 of the lever arm 342 facing the bushing 318. The lever arm 342 is positioned on the shaft 310 adjacent the bushing 318 and axially aligned with the curved block 240 on the mounting bracket 204, as depicted in Figure 13.

Next, the outboard end 316 of the shaft 310 is inserted into the shaft aperture 424 in the rotating cam 196 with the inboard end 420 of the rotating cam 196 facing the lever arm 342. The inboard end 420 of the rotating cam 196 is positioned on the shaft 310 with the tooth segments 388, 388' of the arm and bracket pawls 366, 368 inserted into adjacent notches 446, 448, 450, 452 in the ratchet gear 443, as shown in Figure 17. After the rotating cam 196 is assembled onto the shaft 310, the outboard end 316 of the shaft 310 is inserted into the recessed hole 476 in the shaft boss 474 projecting from the front plate 460 and the cylindrical portion 284 of the bearing frame 282 is inserted into the arcuate portion 28 of the inboard wall 22 of the side arm 18. Next, the rear plate 322 is assembled by abutting the end bosses 330, 332 against the inboard wall 22, aligning the clearance holes 334, 336 with the upper screw holes 42, 44 in the inboard wall 22 and the threaded passageways 238a, 238b in the mounting bracket 204, and engaging the lower surface 340 of the top flange 324 with the mount sections 38, 40 on the inboard wall 22. Next, the threaded shafts 485 of two bracket screws 484 are inserted through the respective clearance holes 334, 336 in the rear plate 322, and fixedly coupled to the threaded passageways 238a, 238b in the upper bosses 228, 230 in the mounting bracket 204. In addition, the threaded shafts 485 of the remaining bracket screws 484 are inserted through the respective lower screw holes 46, 48 in the inboard wall 22 and fixedly coupled to the threaded passageways 238c, 238d in the lower bosses 232, 234 on the mounting bracket 204. After the mounting bracket 204 is fixedly coupled to the inboard wall 22, one hook end 488 of the extension spring 486 is inserted through the spring hole 358 in the lever arm 342 and the opposing hook end 490 is inserted into the spring hole 50 in the inboard wall 22 of the side arm 18, as shown in Figure 16. Next, the end of the adjacent latch release cable 498 is fixedly coupled to the cable attachment 492 and the keyed feature 494 of the cable attachment 492 is inserted into the cable slot 362 in the lever arm 342.

The function of the loop latch release 10 is described below in reference to Figures 16-25. The loop latch release 10 is shown initially in an unactuated condition with the loop latch 136 in the locked condition in Figures 16 and 17. The lever arm 342 is in an unactuated position with the rear stop 356 frictionally engaged with the rearward stop 264 on the mounting bracket 204. Tension is absent in the latch release cable 498. The extension spring 486 spring-biases the lever arm 342 in a clockwise rotational direction (arrow 500), as viewed in Figure 16. The extension spring 486 maintains the lever arm 342 engaged with the rearward stop 264 while tension is absent from the latch release cable 498.

Referring to Figures 16 and 17, the rotating cam 196 is positioned such that one of the cam side portions 442 is engaged with the top surface 172 of the plunger 160 when the lever arm 342 is in the unactuated position and the loop latch 136 is in the locked condition. The return spring 194 spring-biases the top surface 172 of the plunger 160 upward (arrow 149) towards an engaged condition with the rotating cam 196. As a result, the plunger 160 is in a raised position when the lever arm 342 is in the unactuated position.

In addition, the tooth segment 388 of the arm pawl 366 is engaged with the notch 452 on an upper side of the ratchet gear 443 (as viewed in Figure 17), and the tooth segment 388' on the bracket pawl 368 is engaged with the notch 450. The pawl springs 392, 394 (Figure 13) spring-bias the tooth segments 388, 388' of the arm and bracket pawls 366, 368 about the respective arm and bracket screws 404, 406 in the counterclockwise direction (arrows 408, 410) towards an engaged condition with the respective notches 452, 450. Referring to Figure 16, the latch retainer 138 is spring-biased upward (arrow 149) towards an engaged condition with the actuating surface 180 on the plunger legs 176, 178 by the coil springs 148. The loop latch 136 is in the locked position 150 with the U-shaped loops 140 engaged with the tabs 108, 118, 134 on the upper channel 86 and the long rail 88 since the plunger 160 is in the raised position.

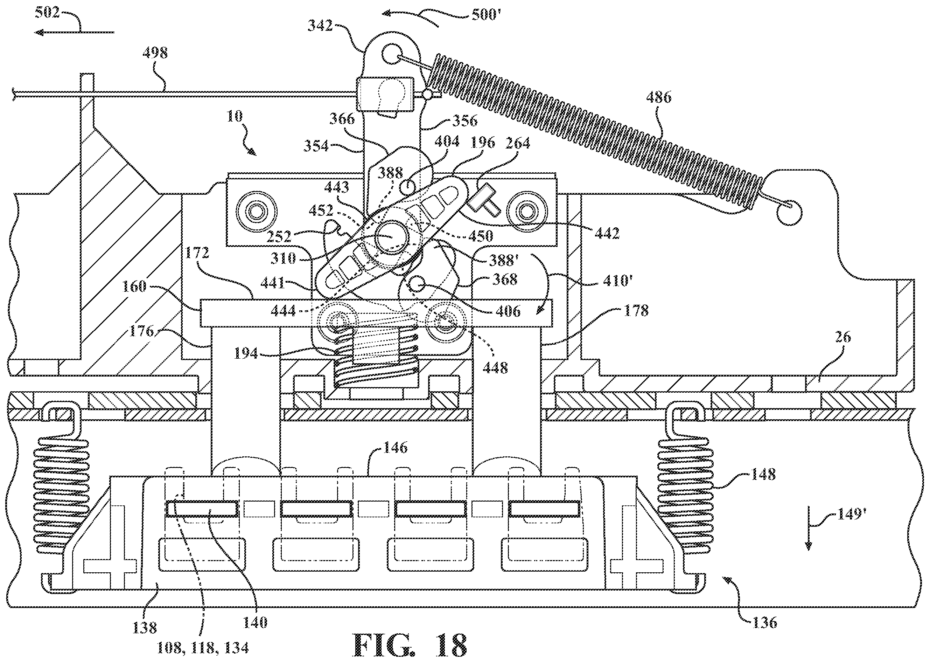

When an unlocking process is initiated, the actuator 496 (Figure 1) applies tension (arrow 502) to the latch release cable 498 which causes the lever arm 342 to rotate in a counterclockwise direction (arrow 500') about the shaft 310, as viewed in Figure 18. The tooth segment 388 of the arm pawl 366 is maintained in engagement with the notch 452 in the ratchet gear 443, causing the rotating cam 196 to rotate with the lever arm 342. However, the tooth segment 388' on the bracket pawl 368 rotates in the clockwise direction (arrow 410') and disengages the tooth segment 388' from notch 450 as the rotating cam 196 is rotated in the counterclockwise direction (arrow 500') since the bracket pawl 368 is pivotably coupled to the mounting bracket 204. The actuating portion 441 of the rotating cam 196 is brought into engagement with the top surface 172 of the plunger 160 as the lever arm 342 rotates the rotating cam 196 in the counterclockwise direction (arrow 500'). As the actuating portion 441 is rotated into contact with the plunger 160, the plunger 160 is transposed downward (arrow 149'), which in turn transposes the latch retainer 138 downward. It will be appreciated that the clockwise and counterclockwise rotational directions might be alternately described as a first rotational direction and a second rotational direction different than the first rotational direction, and the like, without altering the scope of the present invention.

The tooth segment 388' on the bracket pawl 368 slides along the outer surface 444 of the ratchet gear 443 as the ratchet gear 443 rotates until the tooth segment 388' engages with the adjacent notch 448, as shown in Figure 19. The lever arm 342 is rotated in the counterclockwise direction (arrow 500') in response to the tension (arrow 502) applied to the latch release cable 498 until the front stop 354 on the lever arm 342 engages with the forward stop 252 on the mounting bracket 204. The plunger 160 is transposed to a lowered position by the actuating portion 441 of the rotating cam 196 which causes the U-shaped loops 140 to disengage from the tabs 108, 118, 134 on the upper channel 86 and the long rail 88 which in turn unlocks the loop latch 136, as depicted in Figure 19. The amount of downward movement of the plunger 160 is approximately equal to the difference in the shaft radius 425 and the cam radial distance 436, shown in Figure 15.

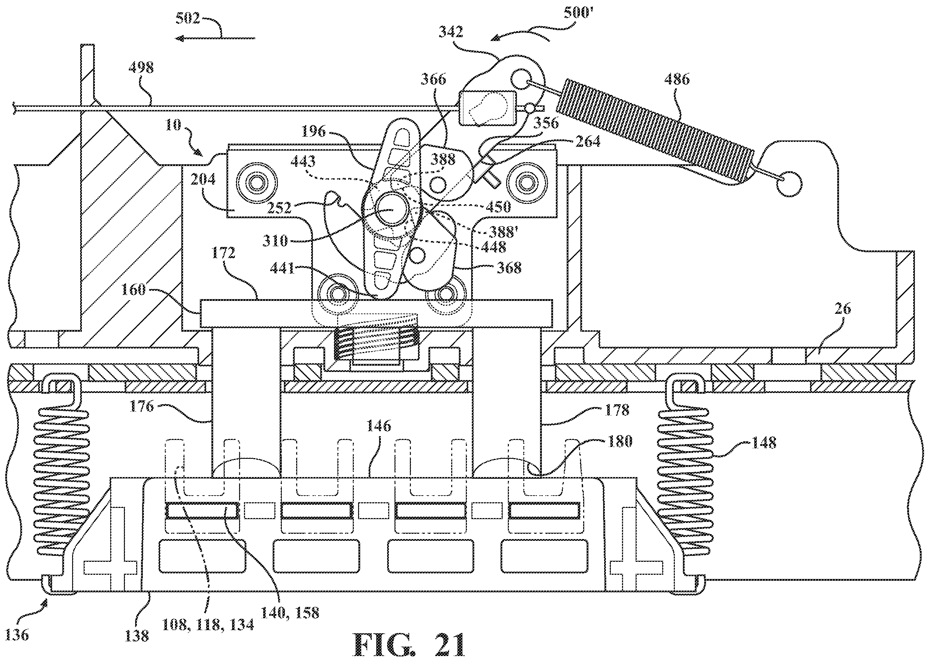

Referring to Figures 19 and 20, the actuator 496 (Figure 1) releases tension from the latch release cable 498 after the lever arm 342 engages with the forward stop 252 on the mounting bracket 204. The extension spring 486 causes the lever arm 342 to rotate in the clockwise direction (arrow 500) about the shaft 310. The tooth segment 388 on the arm pawl 366 is rotated clockwise (arrow 408') about the arm screw 404 causing the tooth segment 388 to disengage from notch 452 as the lever arm 342 rotates clockwise (arrow 500). The tooth segment 388 slides along the outer surface 444 towards notch 450 as the lever arm 342 rotates clockwise (arrow 500). However, the rotating cam 196 is maintained with the actuating portion 441 engaged with the plunger 160 since the tooth segment 388' on the bracket pawl 368 is engaged with the notch 448 and the bracket pawl 368 is pivotably coupled to the mounting bracket 204. As such, the plunger 160 is retained in the lowered position and the loop latch 136 is retained in the unlocked condition while the lever arm 342 is rotated in the clockwise direction (arrow 500) by the extension spring 486. The extension spring 486 rotates the lever arm 342 in the clockwise direction (arrow 500) until the rear stop 356 on the lever arm 342 frictionally engages with the rearward stop 264 on the mounting bracket 204 and the tooth segment 388 on the arm pawl 366 engages with notch 450, as shown in Figure 21.

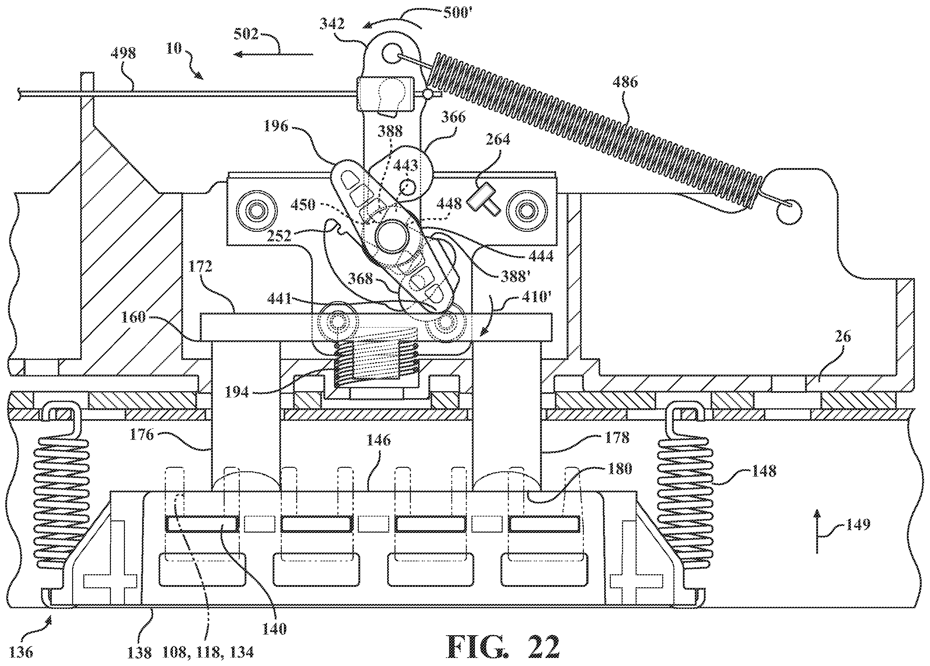

The loop latch 136 is retained in the unlocked condition shown in Figure 21 until a locking process is initiated. When the locking process is initiated, the actuator 496 (Figure 1) applies tension (arrow 502) to the latch release cable 498 which causes the lever arm 342 to rotate in the counterclockwise direction (arrow 500') about the shaft 310, as viewed in Figure 21. The tooth segment 388 of the arm pawl 366 is maintained in engagement with the notch 450 in the ratchet gear 443, causing the rotating cam 196 to rotate with the lever arm 342. Referring to Figure 22, the tooth segment 388' on the bracket pawl 368 rotates in the clockwise direction (arrow 410') in response to the counterclockwise rotation (arrow 500') of the rachet gear 443 which disengages the tooth segment 388' from notch 448. The actuating portion 441 of the rotating cam 196 is rotated upward away from the top surface 172 of the plunger 160 as the lever arm 342 rotates the rotating cam 196 in the counterclockwise direction (arrow 500'). The plunger 160 is transposed upward (arrow 149) by the return spring 194 as the actuating portion 441 is rotated upward (arrow 500') away from the plunger 160, which in turn causes the coil springs 148 to transpose the latch retainer 138 upward (arrow 149).

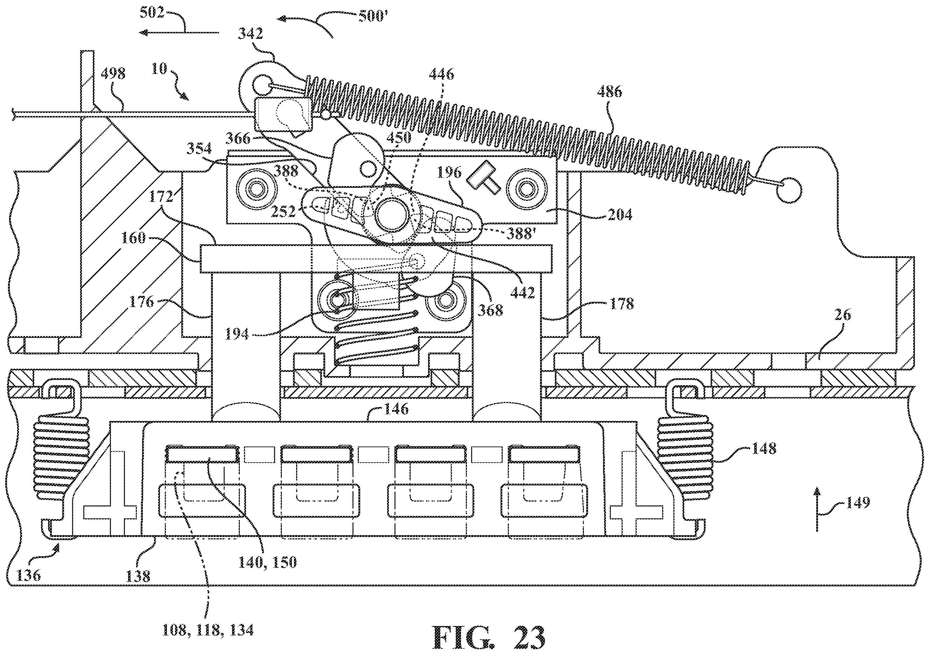

As the lever arm 342 is rotated counterclockwise (arrow 500'), the tooth segment 388' on the bracket pawl 368 slides along the outer surface 444 on the ratchet gear 443 until the tooth segment 388' engages with the adjacent notch 446, as shown in Figure 23. The lever arm 342 is rotated in the counterclockwise direction (arrow 500') by the tension in the latch release cable 498 until the front stop 354 on the lever arm 342 engages with the forward stop 252 on the mounting bracket 204 with the cam side portion 442 oriented towards the top surface 172 of the plunger 160. The return spring 194 causes the plunger 160 to be transposed upward (arrow 149) to maintain engagement between the cam side portion 442 of the rotating cam 196 and the top surface 172 of the plunger 160 which returns the plunger 160 to the raised position. As the plunger 160 moves upward (arrow 149), the U-shaped loops 146 move to the locked position 150 engaged with the tabs 108, 118, 134 on the upper channel 86 and the long rail 88 which causes the loop latch 136 to lock, as depicted in Figure 23.

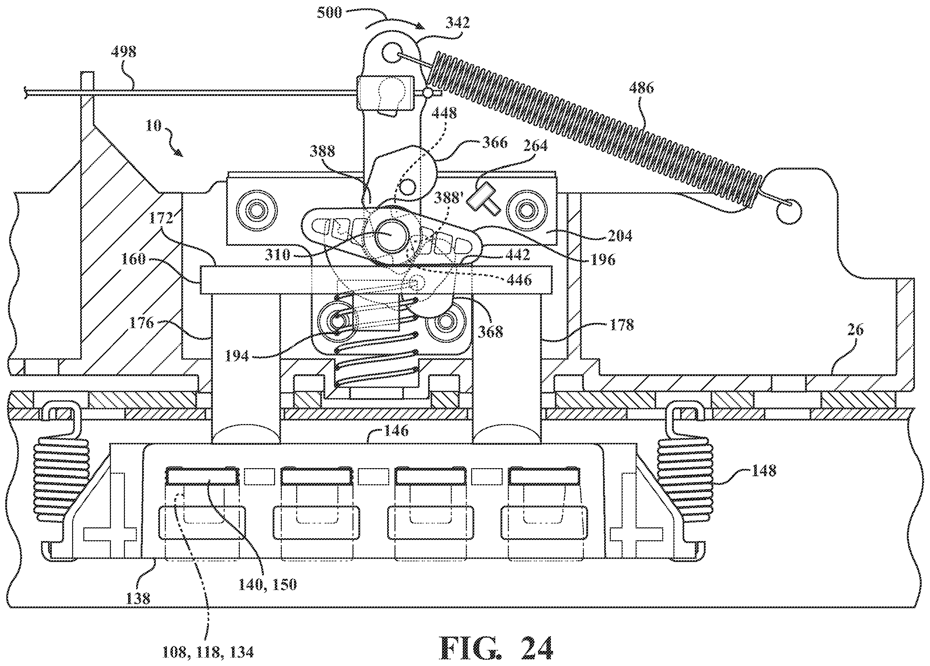

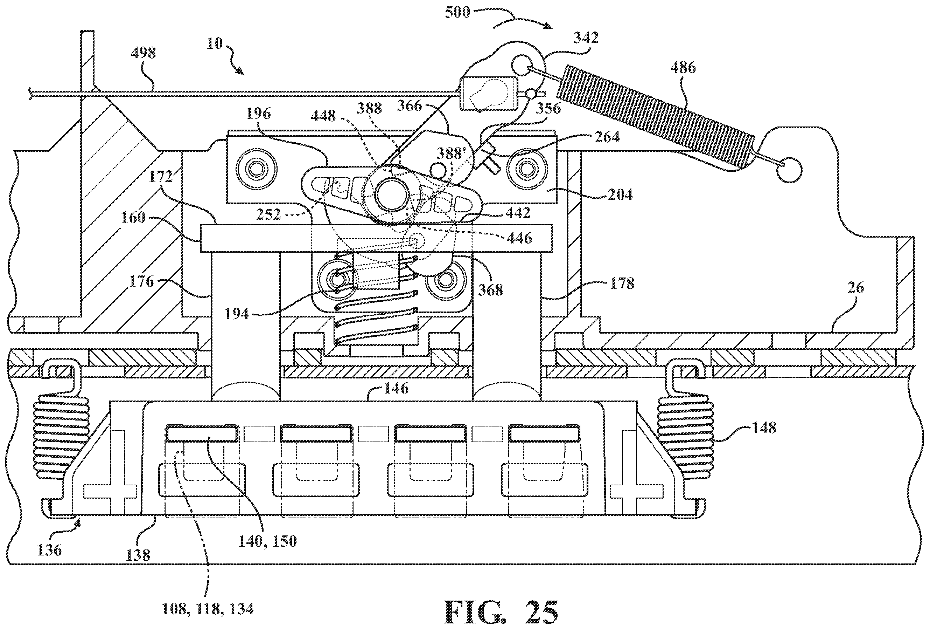

Referring to Figure 23, the actuator 496 (Figure 1) releases tension from the latch release cable 498 after the lever arm 342 engages with the forward stop 252 on the mounting bracket 204. Referring to Figure 24, the extension spring 486 causes the lever arm 342 to rotate in the clockwise direction (arrow 500) about the shaft 310 in response to the tension being removed from the latch release cable 498. The tooth segment 388 on the arm pawl 366 disengages from notch 450 and slides along the outer surface 444 towards notch 448 as the lever arm 342 rotates clockwise (arrow 500). However, the rotating cam 196 is maintained with the cam side portion 442 engaged with the plunger 160 since the tooth segment 388' on the bracket pawl 368 is engaged with the notch 446 and the bracket pawl 368 is pivotably coupled to the mounting bracket 204. As such, the plunger 160 is retained in the raised position and the loop latch 136 is retained in the locked condition as the lever arm 342 is rotated in the clockwise direction (arrow 500) by the extension spring 486. Referring to Figure 25, the extension spring 486 rotates the lever arm 342 in the clockwise direction (arrow 500) until the rear stop 356 on the lever arm 342 frictionally engages with the rearward stop 264 on the mounting bracket 204 and the tooth segment 388 on the arm pawl 366 engages with notch 448, returning the loop latch release 10 to the unactuated condition with the loop latch 136 in the locked condition.

As discussed above, the power long rail assembly 12 of the present invention includes a loop latch release 10 configured to selectively unlock a loop latch 136 which is operatively coupled between an upper channel 86 and a long rail 88. The power long rail assembly 12 includes an actuator 496 operatively coupled to a latch release cable 498 and configured to apply tension to the latch release cable 498 in order to actuate the loop latch release 10. During an unlocking operation, the actuator 496 causes the loop latch release 10 to rotate a rotating cam 196 causing the plunger 160 to move downward and unlock the loop latch 136. The loop latch 136 is retained in the unlocked condition until the actuator 496 applies tension to the latch release cable 498 which causes the loop latch release 10 to rotate the rotating cam 196 causing the plunger 160 to move upward allowing the loop latch 136 to be repositioned to the locked condition.

The invention has been described in an illustrative manner, and it is to be understood that the terminology, which has been used, is intended to be in the nature of words of description rather than of limitation. Many modifications and variations of the present invention are possible in light of the above teachings. It is, therefore, to be understood that within the scope of the appended claims, the invention may be practiced other than as specifically described.

## Claims

1. A loop latch release (10) for an automotive seat assembly having a loop latch (136) repositionable between a locked condition and an unlocked condition, the loop latch release (10) comprising:
a mounting bracket (204);
a shaft (310) rotatably coupled to the mounting bracket (204);
a rotating cam (196) pivotably coupled to the shaft (310), the rotating cam (196) including a ratchet gear (443) having a plurality of circumferentially spaced apart notches (446, 448, 450, 452) and including a cam (426) having an actuating portion (441) and a cam side portion (442);
a plunger (160) operatively coupled to the cam (426) and transposable between a raised position and a lowered position, wherein the plunger (160) is in the raised position when the plunger (160) is engaged with the cam side portion (442) and the plunger (160) is in the lowered position when the plunger (160) is engaged with the actuating portion (441);
a lever arm (342) pivotably coupled to the shaft (310);
an arm pawl (366) pivotably coupled to the lever arm (342) and configured to meshingly engage with an adjacent notch (452) on the ratchet gear (443) during pivotal movement of the lever arm (342); and
a bracket pawl (368) pivotably coupled to the mounting bracket (204) and configured to meshingly engage with an adjacent notch (452) on the ratchet gear (443) and lock the loop latch (136) in the locked condition.

2. The loop latch release (10) as set forth in claim 1, further comprising:
a return spring (194) spring-biasing the plunger (160) towards the raised position.

3. The loop latch release (10) as set forth in claim 2, further comprising:
a rearward stop (264) configured to frictionally engage with the lever arm (342) as the lever arm (342) rotates about the shaft (310) in a first rotational direction.

4. The loop latch release (10) as set forth in claim 3, wherein the lever arm (342) is spring-biased towards the rearward stop (264).

5. The loop latch release (10) as set forth in claim 4, further comprising:
a forward stop (252) configured to frictionally engage with the lever arm (342) as the lever arm (342) rotates about the shaft (310) in a second rotational direction different than the first rotational direction.

6. The loop latch release (10) as set forth in claim 5, further comprising:
a latch release cable (498) operatively coupled to the lever arm (342) and configured to apply tension to the lever arm (342) causing the lever arm (342) to rotate in the second rotational direction.

7. The loop latch release (10) as set forth in claim 6, further comprising:
an arm pawl spring (392) operatively coupled between the lever arm (342) and the arm pawl (366) and configured to spring-bias the arm pawl (366) towards an engaged condition with the ratchet gear (443).

8. The loop latch release (10) as set forth in claim 7, further comprising:
a bracket pawl spring (394) operatively coupled between the mounting bracket (204) and the bracket pawl (368) and configured to spring-bias the bracket pawl (368) towards an engaged condition with the ratchet gear (443);
preferably further comprising a bearing (306) pivotably coupled to the shaft (310);
and still preferably further comprising a bearing frame (282) fixedly coupled to the bearing (306) and fixedly coupled to the mounting bracket (204).

9. The loop latch release (10) as set forth in claim 7, wherein when the lever arm (342) is rotated in the second rotational direction, the arm pawl (366) engaged with the adjacent notch (452) in the ratchet gear (443) causes the rotating cam (196) to rotate with the lever arm (342).

10. The loop latch release (10) as set forth in claim 9, wherein the bracket pawl (368) disengages from the ratchet gear (443) as the lever arm (342) is rotated in the second rotational direction.

11. The loop latch release (10) as set forth in claim 9, wherein when the lever arm (342) is rotated in the first rotational direction, the bracket pawl (368) engaged with the ratchet gear (443) prevents the rotating cam (196) from rotating in the first rotational direction.

12. The loop latch release (10) as set forth in claim 11, wherein the arm pawl (366) disengages from the ratchet gear (443) as the lever arm (342) is rotated in the first rotational direction;
preferably further comprising an actuator (496) configured to selectively apply tension to the latch release cable (498).

13. A long rail assembly (12) for use in an automotive vehicle, comprising:
an upper channel (86) slidably coupled to a long rail (88);
a seat base (14) fixedly coupled to the upper channel (86);
a loop latch (136) operatively coupled between the upper channel (86) and the long rail (88) and configured to lock the upper channel (86) to the long rail (88) when the loop latch (136) is in a locked condition preventing movement of the upper channel (86) relative to the long rail (88) and wherein the upper channel (86) is transposable along the long rail (88) when the loop latch (136) is in an unlocked condition; and
a loop latch release (10) as set forth in any one of the claims 1 to 12, with its mounting bracket (204) fixedly coupled to the seat base (14), and
wherein the loop latch (136) is in the unlocked condition when the plunger (160) is in the lowered position and the loop latch (136) is in the locked condition when the plunger (160) is in the raised position.

14. The long rail assembly (12) as set forth in claim 13, further comprising:
a latch release cable (498) operatively coupled to the lever arm (342);
an actuator (496) operatively coupled to the latch release cable (498) and configured to apply tension to the latch release cable (498); and
a forward stop (252) and a rearward stop (264) defining a rotational range of motion of the lever arm (342);
wherein when the actuator (496) applies tension to the latch release cable (498), the latch release cable (498) rotates the lever arm (342) about the shaft (310) in a second rotational direction until the lever arm (342) engages with the forward stop (252), the arm pawl (366) engaged with the adjacent notch (452) in the ratchet gear (443) causes the rotating cam (196) to rotate with the lever arm (342), and the bracket pawl (368) disengages from the ratchet gear (443).

15. The long rail assembly (12) as set forth in claim 14, wherein:
the lever arm (342) is spring-biased in a first rotational direction different than the second rotational direction and towards an engaged condition with the rearward stop (264); and
when the actuator (496) removes tension from the latch release cable (498), the lever arm (342) automatically rotates in the first rotational direction until the lever arm (342) engages the rearward stop (264), the bracket pawl (368) engaged with the adjacent notch (452) in the ratchet gear (443) prevents the rotating cam (196) from rotating with the lever arm (342), and the arm pawl (366) disengages from the ratchet gear (443).

## Patentansprüche

1. Schleifenverriegelungsfreigabe (10) für eine Kraftfahrzeugsitzanordnung mit einer Schleifenverriegelung (136), die zwischen einem verriegelten Zustand und einem entriegelten Zustand umpositionierbar ist, wobei die Schleifenverriegelungsfreigabe (10) umfasst:
eine Montagehalterung (204);
eine Welle (310), die drehbar mit der Montagehalterung (204) gekoppelt ist;
einen Drehnocken (196), der schwenkbar mit der Welle (310) verbunden ist, wobei der Drehnocken (196) ein Sperrgetriebe (443) mit einer Vielzahl von in Umfangsrichtung beabstandeten Kerben (446, 448, 450, 452) und einschließend einen Nocken (426) mit einem Betätigungsabschnitt (441) und einem nockenseitigen Abschnitt (442) einschließt;
einen Kolben (160), der betriebsmäßig mit der Nocke (426) gekoppelt ist und zwischen einer angehobenen Position und einer abgesenkten Position umsetzbar ist, wobei sich der Kolben (160) in der angehobenen Position befindet, wenn der Kolben (160) mit dem nockenseitigen Abschnitt (442) in Eingriff steht, und sich der Kolben (160) in der abgesenkten Position befindet, wenn der Kolben (160) mit dem Betätigungsabschnitt (441) in Eingriff steht;
einen Hebelarm (342), der schwenkbar mit der Welle (310) verbunden ist;
eine Armklinke (366), die schwenkbar mit dem Hebelarm (342) gekoppelt ist und so konfiguriert ist, dass sie während der Schwenkbewegung des Hebelarms (342) in eine benachbarte Kerbe (452) am Sperrgetriebe (443) eingreift; und
eine Halterungsklinke (368), die schwenkbar mit der Montagehalterung (204) gekoppelt ist und so konfiguriert ist, dass sie in eine benachbarte Kerbe (452) am Sperrgetriebe (443) eingreift und die Schleifenverriegelung (136) im verriegelten Zustand verriegelt.

2. Schleifenverriegelungsfreigabe (10) nach Anspruch 1, ferner umfassend:
eine Rückstellfeder (194), die den Kolben (160) in Richtung der angehobenen Position vorspannt.

3. Schleifenverriegelungsfreigabe (10) nach Anspruch 2, ferner umfassend:
einen hinteren Anschlag (264), der so konfiguriert ist, dass er mit dem Hebelarm (342) reibschlüssig in Eingriff kommt, wenn sich der Hebelarm (342) in einer ersten Drehrichtung um die Welle (310) dreht.

4. Schleifenverriegelungsfreigabe (10) nach Anspruch 3, wobei der Hebelarm (342) durch eine Feder in Richtung des hinteren Anschlags (264) vorgespannt ist.

5. Schleifenverriegelungsfreigabe (10) nach Anspruch 4, ferner umfassend:
einen vorderen Anschlag (252), der so konfiguriert ist, dass er mit dem Hebelarm (342) reibschlüssig in Eingriff kommt, wenn sich der Hebelarm (342) in einer zweiten Drehrichtung um die Welle (310) dreht, die sich von der ersten Drehrichtung unterscheidet.

6. Schleifenverriegelungsfreigabe (10) nach Anspruch 5, ferner umfassend:
ein Verriegelungsfreigabekabel (498), das betriebsmäßig mit dem Hebelarm (342) gekoppelt ist und dazu konfiguriert ist, Spannung auf den Hebelarm (342) auszuüben, wodurch der Hebelarm (342) in die zweite Drehrichtung gedreht wird.

7. Schleifenverriegelungsfreigabe (10) nach Anspruch 6, ferner umfassend:
eine Armsperrklinkenfeder (392), die zwischen dem Hebelarm (342) und der Armsperrklinke (366) betriebsmäßig gekoppelt ist und so konfiguriert ist, dass sie die Armsperrklinke (366) in Richtung eines Eingriffszustands mit dem Sperrklinkenrad (443) federvorspannt.

8. Schleifenverriegelungsfreigabe (10) nach Anspruch 7, ferner umfassend:
eine Halterungsklinkenfeder (394), die zwischen der Montagehalterung (204) und der Halterungsklinke (368) betriebsmäßig gekoppelt ist und so konfiguriert ist, dass sie die Halterungsklinke (368) in Richtung eines Eingriffszustands mit dem Sperrklinkenrad (443) federvorspannt;
vorzugsweise ferner umfassend ein Lager (306), das schwenkbar mit der Welle (310) gekoppelt ist;
und noch mehr bevorzugt ferner umfassend einen Lagerrahmen (282), der fest mit dem Lager (306) und fest mit der Montagehalterung (204) gekoppelt ist.

9. Schleifenverriegelungsfreigabe (10) nach Anspruch 7, wobei, wenn der Hebelarm (342) in die zweite Drehrichtung gedreht wird, die Armklinke (366), die mit der benachbarten Kerbe (452) im Sperrgetriebe (443) in Eingriff steht, bewirkt, dass sich der Drehnocken (196) mit dem Hebelarm (342) dreht.

10. Schleifenverriegelungsfreigabe (10) nach Anspruch 9, wobei sich die Halterungsklinke (368) vom Sperrgetriebe (443) löst, wenn der Hebelarm (342) in die zweite Drehrichtung gedreht wird.

11. Schleifenverriegelungsfreigabe (10) nach Anspruch 9, wobei, wenn der Hebelarm (342) in die erste Drehrichtung gedreht wird, die mit dem Sperrgetriebe (443) in Eingriff stehende Halterungsklinke (368) verhindert, dass sich der Drehnocken (196) in die erste Drehrichtung dreht.

12. Schleifenverriegelungsfreigabe (10) nach Anspruch 11, wobei sich die Armklinke (3 66) vom Sperrgetriebe (443) löst, wenn der Hebelarm (342) in die erste Drehrichtung gedreht wird;
Vorzugsweise ferner umfassend einen Aktuator (496), der so konfiguriert ist, dass er selektiv Spannung auf das Verriegelungsfreigabekabel (498) ausübt.

13. Lange Schienenanordnung (12) zur Verwendung in einem Kraftfahrzeug, umfassend:
einen oberen Kanal (86), der verschiebbar mit einer langen Schiene (88) verbunden ist;
eine Sitzbasis (14), die fest mit dem oberen Kanal (86) verbunden ist;
eine Schleifenverriegelung (136), die betriebsmäßig zwischen dem oberen Kanal (86) und der langen Schiene (88) gekoppelt ist und so konfiguriert ist, dass er den oberen Kanal (86) an der langen Schiene (88) verriegelt, wenn sich die Schleifenverriegelung (136) in einem verriegelten Zustand befindet, wodurch eine Bewegung des oberen Kanals (86) relativ zur langen Schiene (88) verhindert wird, und wobei der obere Kanal (86) entlang der langen Schiene (88) umsetzbar ist, wenn sich die Schleifenverriegelung (136) in einem entriegelten Zustand befindet; und
eine Schleifenverriegelungsfreigabe (10) nach einem der Ansprüche 1 bis 12, dessen Montagehalterung (204) fest mit der Sitzbasis (14) verbunden ist, und
wobei sich die Schleifenverriegelung (136) im entriegelten Zustand befindet, wenn sich der Kolben (160) in der abgesenkten Position befindet, und sich die Schleifenverriegelung (136) im verriegelten Zustand befindet, wenn sich der Kolben (160) in der angehobenen Position befindet.

14. Lange Schienenanordnung (12) nach Anspruch 13, ferner umfassend:
ein Verriegelungsfreigabekabel (498), das betriebsmäßig mit dem Hebelarm (342) gekoppelt ist;
einen Aktuator (496), der betriebsmäßig mit dem Entriegelungskabel (498) gekoppelt ist und dazu konfiguriert ist, Spannung auf das Entriegelungskabel (498) auszuüben; und
einen vorderen Anschlag (252) und einen hinteren Anschlag (264), die einen Drehbereich der Bewegung des Hebelarms (342) definieren;
wobei, wenn der Aktuator (496) Spannung auf das Verriegelungsfreigabekabel (498) ausübt, das Verriegelungsfreigabekabel (498) den Hebelarm (342) in einer zweiten Drehrichtung um die Welle (310) dreht, bis der Hebelarm (342) mit dem vorderen Anschlag (252) in Eingriff kommt, die Armklinke (366), die mit der benachbarten Kerbe (452) im Sperrgetriebe (443) in Eingriff kommt, bewirkt, dass sich der Drehnocken (196) mit dem Hebelarm (342) dreht, und die Halterungsklinke (368) sich vom Sperrgetriebe (443) löst.

15. Lange Schienenanordnung (12) nach Anspruch 14, wobei:
der Hebelarm (342) in einer ersten Drehrichtung, die sich von der zweiten Drehrichtung unterscheidet, und in Richtung eines Eingriffszustands mit dem hinteren Anschlag (264) federvorgespannt ist; und
wenn der Aktuator (496) die Spannung vom Verriegelungsfreigabekabel (498) löst, sich der Hebelarm (342) automatisch in die erste Drehrichtung dreht, bis der Hebelarm (342) am hinteren Anschlag (264) anschlägt, die in die benachbarte Kerbe (452) im Sperrgetriebe (443) eingreifende Halterungsklinke (368) verhindert, dass sich der Drehnocken (196) mit dem Hebelarm (342) dreht, und die Armklinke (366) sich vom Sperrgetriebe (443) löst.

## Revendications

1. Moyen de libération de verrou à boucle (10) pour un assemblage de siège automobile ayant un verrou à boucle (136) pouvant être repositionné entre une condition bloquée et une condition débloquée, le moyen de libération de verrou à boucle (10) comprenant :
un support de montage (204) ;
un arbre (310) couplé en rotation au support de montage (204) ;
une came rotative (196) couplée de manière pivotante à l'arbre (310), la came rotative (196) incluant une roue à rochet (443) ayant une pluralité d'encoches espacées circonférentiellement (446, 448, 450, 452) et incluant une came (426) ayant une portion d'actionnement (441) et une portion latérale de came (442) ;
un piston (160) couplé de manière fonctionnelle à la came (426) et pouvant être transposé entre une position élevée et une position abaissée, le piston (160) étant dans la position élevée quand le piston (160) est engagé avec la portion latérale de came (442), et le piston (160) étant dans la position abaissée quand le piston (160) est engagé avec la portion d'actionnement (441) ;
un bras de levier (342) couplé de manière pivotante à l'arbre (310) ;
un cliquet de bras (366) couplé de manière pivotante au bras de levier (342) et configuré pour s'engager par engrènement avec une encoche adjacente (452) sur la roue à rochet (443) pendant un déplacement de pivotement du bras de levier (342) ; et
un cliquet de support (368) couplé de manière pivotante au support de montage (204) et configuré pour s'engager par engrènement avec une encoche adjacente (452) sur la roue à rochet (443) et pour bloquer le verrou à boucle (136) dans la condition bloquée.

2. Moyen de libération de verrou à boucle (10) selon la revendication 1, comprenant en outre :
un ressort de rappel (194) sollicitant par ressort le piston (160) vers la position élevée.

3. Moyen de libération de verrou à boucle (10) selon la revendication 2, comprenant en outre :
un arrêt arrière (264) configuré pour s'engager par frottement avec le bras de levier (342) lorsque le bras de levier (342) est mis en rotation autour de l'arbre (310) dans une première direction de rotation.

4. Moyen de libération de verrou à boucle (10) selon la revendication 3, dans lequel le bras de levier (342) est sollicité par ressort vers l'arrêt arrière (264).

5. Moyen de libération de verrou à boucle (10) selon la revendication 4, comprenant en outre :
un arrêt avant (252) configuré pour s'engager par frottement avec le bras de levier (342) lorsque le bras de levier (342) est mis en rotation autour de l'arbre (310) dans une seconde direction de rotation différente de la première direction de rotation.

6. Moyen de libération de verrou à boucle (10) selon la revendication 5, comprenant en outre :
un câble de libération de verrou (498) couplé de manière fonctionnelle au bras de levier (342) et configuré pour appliquer une tension sur le bras de levier (342) amenant le bras de levier (342) à être mis en rotation dans la seconde direction de rotation.

7. Moyen de libération de verrou à boucle (10) selon la revendication 6, comprenant en outre :
un ressort de cliquet de bras (392) couplé de manière fonctionnelle entre le bras de levier (342) et le cliquet de bras (366) et configuré pour solliciter par ressort le cliquet de bras (366) vers une condition engagée avec la roue à rochet (443).

8. Moyen de libération de verrou à boucle (10) selon la revendication 7, comprenant en outre :
un ressort de cliquet de support (394) couplé de manière fonctionnelle entre le support de montage (204) et le cliquet de support (368) et configuré pour solliciter par ressort le cliquet de support (368) vers une condition engagée avec la roue à rochet (443) ;
de préférence comprenant en outre un palier (306) couplé de manière pivotante à l'arbre (310) et couplé de manière fixe au support de montage (204).

9. Moyen de libération de verrou à boucle (10) selon la revendication 7, dans lequel, quand le bras de levier (342) est mis en rotation dans la seconde direction de rotation, le cliquet de bras (366) engagé avec l'encoche adjacente (452) dans la roue à rochet (443) amène la came rotative (196) à être mis en rotation avec le bras de levier (342).

10. Moyen de libération de verrou à boucle (10) selon la revendication 9, dans lequel le cliquet de support (368) se désengage de la roue à rochet (443) lorsque le bras de levier (342) est mis en rotation dans la seconde direction de rotation.

11. Moyen de libération de verrou à boucle (10) selon la revendication 9, dans lequel, quand le bras de levier (342) est mis en rotation dans la première direction de rotation, le cliquet de support (368) engagé avec la roue à rochet (443) empêche la came rotative (196) d'être mise en rotation dans la première direction de rotation.

12. Moyen de libération de verrou à boucle (10) selon la revendication 11, dans lequel le cliquet de bras (366) se désengage de la roue à rochet (443) lorsque le bras de levier (342) est mis en rotation dans la première direction de rotation ;
de préférence comprenant en outre un actionneur (496) configuré pour appliquer sélectivement une tension sur le câble de libération de verrou (498).

13. Assemblage de rail long (12) destiné à être utilisé dans un véhicule automobile, comprenant :
un canal supérieur (86) couplé de manière coulissante à un rail long (88) ;
une base de siège (14) couplée de manière fixe au canal supérieur (86) ;
un verrou à boucle (136) couplé de manière fonctionnelle entre le canal supérieur (86) et le rail long (88) et configuré pour bloquer le canal supérieur (86) sur le rail long (88) quand le verrou à boucle (136) est dans une condition bloquée empêchant un déplacement du rail supérieur (86) relativement au rail long (88) et dans lequel le canal supérieur (86) peut être transposé le long du rail long (88) quand le verrou à boucle (136) est dans une position débloquée ; et
un moyen de libération de verrou à boucle (10) selon l'une quelconque des revendications 1 à 12, le support de montage de celui-ci (204) étant couplé de manière fixe à la base de siège (14), et
dans lequel le verrou à boucle (136) est dans la condition débloquée quand le piston (160) est dans la position abaissée et le verrou à boucle (136) est dans la condition bloquée quand le piston (160) dans la position élevée.

14. Assemblage de rail long (12) selon la revendication 13, comprenant en outre :
un câble de libération de verrou (498) couplé de manière fonctionnelle au bras de levier (342) ;
un actionneur (496) couplé de manière fonctionnelle au câble de libération de verrou (498) et configuré pour appliquer une tension sur le câble de libération de verrou (498) ; et
un arrêt avant (252) et un arrêt arrière (264) définissant une plage de rotation de déplacement du bras de levier (342) ;
dans lequel, quand l'actionneur (496) applique une tension sur le câble de libération de verrou (498), le câble de libération de verrou (498) met en rotation le bras de levier (342) autour de l'arbre (310) dans une seconde direction de rotation jusqu'à ce que le bras de levier (342) s'engage avec l'arrêt avant (252), le cliquet de bras (366) engagé avec l'encoche adjacente (452) dans la roue à rochet (443) amène la came rotative (196) à être mise en rotation avec le bras de levier (342), et le cliquet de support (368) se désengage de la roue à rochet (443).

15. Assemblage de rail long (12) selon la revendication 14, dans lequel :
le bras de levier (342) est sollicité par ressort dans une première direction de rotation différente de la seconde direction de rotation et vers une condition engagée avec l'arrêt arrière (264) ; et
quand l'actionneur (496) supprime une tension du câble de libération de verrou (498), le bras de levier (342) est mis automatiquement en rotation dans la première direction de rotation jusqu'à ce que le bras de levier (342) s'engage avec l'arrêt arrière (264), le cliquet de support (368) engagé avec l'encoche adjacente (452) dans la roue à rochet (443) empêche la came rotative (196) d'être mise en rotation avec le bras de levier (342), et le cliquet de bras (366) se désengage de la roue à rochet (443).
